# EUROPÄISCHE PATENTSCHRIFT

(11) **EP 4 114 726 B1**
(45) Veröffentlichungstag und Bekanntmachung des Hinweises auf die Patenterteilung: **12.11.2025**
(21) Anmeldenummer: 21712026.0
(22) Anmeldetag: 03.03.2021
(51) Int. Cl.: B64C 27/26, B64C 27/28, B64C 27/52, B64C 27/08, B64U 30/10

(54) **FLUGGERÄT MIT MEHREREN FLUGMODI UND VERFAHREN ZU DESSEN BETREIBEN**
AIRCRAFT COMPRISING A PLURALITY OF FLYING MODES, AND METHOD FOR OPERATING SAME
AÉRONEF PRÉSENTANT PLUSIEURS MODES DE VOL ET PROCÉDÉ POUR FAIRE FONCTIONNER CET AÉRONEF

(30) Priorität: 05.03.2020 DE 102020105899
(43) Veröffentlichungstag der Anmeldung: 11.01.2023
(73) Patentinhaber: Innotec Lightweight Engineering & Polymer Technology GmbH, 38642 Goslar (DE)
(72) Erfinder: HUFENBACH, Werner, 38642 Goslar (DE)
(74) Vertreter: Lippert Stachow Patentanwälte Rechtsanwälte Partnerschaft mbB
(86) Internationale Anmeldenummer: PCT/DE2021/100215
(87) Internationale Veröffentlichungsnummer: WO 2021/175376

(56) Entgegenhaltungen:
- WO-A1-2020/035900
- US-A- 3 589 646
- US-A1- 2019 152 593
- US-A1- 2019 322 368
- US-B1- 6 845 939

## Beschreibung

Die Erfindung betrifft ein senkrecht startendes und landendes Fluggerät zum Transport von Personen und/oder Lasten, ein Verfahren zum Betreiben eines solchen Fluggeräts, eine Steuereinheit zur Steuerung eines solchen Fluggeräts sowie ein Computerprogramm.

Fluggeräte zum Transport von Personen und/oder Lasten gewinnen zunehmend an Bedeutung, da sie eine schnelle Beförderung weitgehend unabhängig von Infrastruktureinrichtungen, wie z. B. Straßen, Schienen, Brücken, Tunnel usw., ermöglichen. Insbesondere trifft dies auf kleinere Fluggeräte zu, die senkrecht starten und landen können und daher keine Start- und Landebahn benötigen.

Aus der WO 2019/114884 A1 ist beispielsweise ein modulares Fluggerät mit einem Flugmodul, einem Transportmodul und einer Kupplungseinrichtung bekannt. Das Flugmodul kann Luftleiteinrichtungen zur Steigerung der Effizienz des Fluggerätes sowie zur Stabilisierung und/oder Verbesserung der Strömungseigenschaften sowohl im Steig- und Sinkflug als auch im Reiseflug aufweisen. Optional kann ein Anstellwinkel der Luftleiteinrichtungen variierbar sein, so dass die Auftriebsfunktion des Flugmoduls entsprechend den Strömungsverhältnissen beeinflusst werden kann. Darüber hinaus kann auch ein Neigungswinkel des Flugmoduls zwischen 30° und 150° variiert werden, so dass im Flugbetrieb stets eine komfortable vertikale Ausrichtung des Transportmoduls in Richtung der Schwerkraftlinie S ermöglicht werden kann.

Eine solche Konfiguration ist gut für einen Kurzstreckenbetrieb des Fluggeräts geeignet. Allerdings ist die Effizienz des Fluggeräts in Hinblick auf den Energieverbrauch bei Langstreckenbetrieb häufig nicht ausreichend, um lange Strecken bei elektrischem Antrieb mit derzeitig verfügbaren Energiespeichern absolvieren zu können.

Aus der US 2019/922368 A1 ist ein VTOL-Transportsystem bekannt, das ein vertikales Start- und Landeflugzeug (eVTOL) und ein Bodenfahrzeug (Auto) zum Personentransport umfasst. Das eVTOL weist eine Rotorbaugruppe mit einem Rotorantrieb und einen über einen Rotorstator mit der Rotorbaugruppe verbundenen langen, stabförmigen Rumpf auf, der Flügel und zwei Drehgelenkverbindungen aufweist und an dessen unteren Ende ein Nutzlastverbinder vorgesehen ist, an dem das Bodenfahrzeug angedockt werden kann. Der Rumpf kann mittels der Drehgelenkverbindungen jeweils eine Neigung gegenüber der Rotorbaugruppe bzw. gegenüber dem Bodenfahrzeug realisieren. Im Rumpf sind Aufbewahrungsmöglichkeiten für Energiespeicher angegeben.

Auch diese Konfiguration des Fluggeräts verfügt in Hinblick auf den Energieverbrauch und die Energiespeicherkapazität aufgrund der sperrigen, mehrfach gelenkigen Gestaltung, welche zu ungünstigen Hebelkräften unter Einwirkung der Gravitationskraft auf das Fluggerät führt, weiter aufgrund des Vorhandenseins nur eines steuerbaren elektrischen Rotorantriebs und der geringen Raumkapazität zur Unterbringung von Energiespeichern für den Transport der erheblichen Last über keine ausreichende Effizienz für den Langstreckenbetrieb.

Vor diesem Hintergrund ist es Aufgabe der Erfindung, Möglichkeiten anzugeben, mit denen die Energieeffizienz eines vertikal startenden und landenden Fluggeräts verbessert werden kann.

Gelöst wird diese Aufgabe durch ein Fluggerät nach dem unabhängigen Anspruch 1 und durch ein Verfahren nach dem unabhängigen Anspruch 16. Weiterbildungen der Erfindung sind in den abhängigen Ansprüchen angegeben.

Ein erster Aspekt der Erfindung betrifft ein senkrecht startendes und landendes Fluggerät zum Transport von Personen und/oder Lasten nach Anspruch 1. Das Fluggerät weist eine Flugeinheit mit mehreren an einer Tragwerksstruktur angeordneten Antriebseinheiten auf. Jede Antriebseinheit kann wiederum einen Elektromotor und wenigstens einen mit dem Elektromotor in Wirkverbindung stehenden Propeller aufweisen.

Die Tragwerksstruktur ist in einer Ebene E erstreckt ausgebildet, wobei die Ebene E der mittleren Querschnittsebene der Tragwerksstruktur entspricht.

Bei dem Fluggerät handelt es sich um ein sog. VTOL (engl. Vertical Take-Off and Landing) Fluggerät. Die Flugeinheit dient dem Antrieb des Fluggeräts.

Die Tragwerksstruktur kann radial, axial und tangential angeordnete, vorzugweise gerade oder gekrümmte Tragwerksbalken aufweisen, die beispielsweise mittels der Tragwerksstruktur zugeordneten Verbindungsstücken, z. B. T-Stücken, an Knotenpunkten miteinander und ggf. mit einer mittig in der Tragwerksstruktur angeordneten Zentraleinheit verbunden sein können.

Die miteinander verbundenen Tragwerksbalken können eine in sich geschlossene Tragwerksstruktur, d. h. ohne frei endende Tragwerksbalken, bilden, die damit besonders steif ist.

Die Tragwerksbalken können beispielsweise so angeordnet sein, dass eine in der Ebene E erstreckte, hexagonal verstrebte Tragwerksstruktur ausgebildet ist. Dazu können sechs radial gleichmäßig verteilt angeordnete Tragwerksbalken vorgesehen sein, so dass zwei benachbarte radial angeordnete Tragwerksbalken einen Winkel von ungefähr 60° einschließen. Beispielsweise kann die Flugeinheit in der hexagonalen Ausführung der Tragwerksstruktur insgesamt 18 Antriebseinheiten aufweisen.

Neben den Antriebseinheiten sind an der Tragwerksstruktur ein oder mehrere Luftleiteinrichtungen angeordnet. Die Luftleiteinrichtungen können tragflächen- bzw. flügelartig, beispielsweise plattenförmig oder leicht gewölbt, ausgebildet sein und sind über jeweils eine Lagerachse der Luftleiteinrichtung winkelverstellbar an der Tragwerksstruktur gelagert. Bei einer tragflächenartigen Ausgestaltung können die Luftleiteinrichtungen eine Anströmkante (engl. leading edge) und eine Abströmkante (engl. trailing edge) aufweisen, wobei sich die Anströmkante im Streckenflugbetrieb in Flugrichtung betrachtet vor der Abströmkante befindet. Hierbei befindet sich die Saugseite (engl. suction side) oben und die Druckseite (engl. pressure side) unten. Die tragflächenartigen Luftleiteinrichtungen können beidseitig der Lagerachse erstreckte Flügelabschnitte aufweisen, wobei ein Flügelabschnitt, der im Streckenflugbetrieb im Wesentlichen in Flugrichtung weist, als Anströmflügel und ein von der Lagerachse gegensinnig erstreckter Flügelabschnitt als Abströmflügel definiert ist, welcher in Flugrichtung des Streckenflugbetriebs dem Anströmflügel nachgeordnet ist und im Wesentlichen entgegen der Flugrichtung weist.

Die Anstellwinkel β₁₋ₙ der Luftleiteinrichtungen ergeben sich aus der Winkelstellung der drehbar gelagerten Luftleiteinrichtung gegenüber der Ebene E der Tragwerksstruktur und sind jeweils zwischen einem minimalen Anstellwinkel β_{1-n,min} und einem maximalen Anstellwinkel β_{1-n,max} einstellbar.

Der Anstellwinkel β₁₋ₙ einer jeden Luftleiteinrichtung ist als der größere der beiden Winkel - oder bei gleichgroßen Winkeln als einer der beiden gleichgroßen Winkel - definiert, der von der Lagerachse ausgehend durch eine mittlere Querschnittsebene Q der Luftleiteinrichtung und der Ebene E der Tragwerksstruktur eingeschlossen wird.

Weist die Luftleiteinrichtung beidseitig der Lagerachse erstreckte Flügelabschnitte auf, ist der Anstellwinkel β₁₋ₙ einer jeden Luftleiteinrichtung als der größere der beiden Winkel - oder bei gleich großen Winkeln als einer der beiden gleichgroßen Winkel - definiert, der von der Lagerachse ausgehend durch eine mittlere Querschnittsebene Q desselben Flügelabschnitts einer Luftleiteinrichtung und der Ebene E der Tragwerksstruktur eingeschlossen wird.

Der Anstellwinkel β₁₋ₙ ist daher stets in einem Winkelbereich zwischen 90° bis 180 °definiert.

Bei geringerer Anstellung / Spreizung der Luftleiteinrichtungen bzw. der Flügelabschnitte der Luftleiteinrichtungen gegenüber der Ebene E der Tragwerksstruktur ergeben sich entsprechend größere Anstellwinkel β₁₋ₙ.

Bei größerer Anstellung / Spreizung der Luftleiteinrichtungen bzw. der Flügelabschnitte der Luftleiteinrichtungen gegenüber der Ebene E der Tragwerksstruktur ergeben sich entsprechend kleinere Anstellwinkel β₁₋ₙ.

Bei minimaler Anstellung / Spreizung der Luftleiteinrichtungen bzw. der Flügelabschnitte der Luftleiteinrichtungen gegenüber der Ebene E der Tragwerksstruktur können die maximalen Anstellwinkel β_{1-n,max} bevorzugt in einem Bereich 150° ≤ β_{1-n,max} ≤ 180°, besonders bevorzugt nahe 180° liegen.

Bei maximaler Anstellung / Spreizung der Luftleiteinrichtungen bzw. der Flügelabschnitte der Luftleiteinrichtungen gegenüber der Ebene E der Tragwerksstruktur ergeben sich entsprechend minimale Anstellwinkel β_{1-n,min} in einem Bereich 90° ≤ β_{1-n,min} ≤ 120°, besonders bevorzugt nahe 90°.

Bei der maximalen Anstellung der Luftleiteinrichtung bzw. der Flügelabschnitte der Luftleiteinrichtung in einem minimalen Anstellwinkel βₘᵢₙ von 90° ist die Luftleiteinrichtung bzw. sind die Flügelabschnitte im Wesentlichen senkrecht zur Ebene E ausgerichtet. Dabei können sowohl der im Streckenflugbetrieb in Flugrichtung weisende Flügelabschnitt der Luftleiteinrichtung (Anströmflügel) als auch der im Streckenflugbetrieb entgegen der Flugrichtung weisende Flügelabschnitt der Luftleiteinrichtung (Abströmflügel) vertikal nach oben angestellt sein.

Bei der minimalen Anstellung der Luftleiteinrichtung bzw. der Flügelabschnitte der Luftleiteinrichtung in einem maximalen Anstellwinkel βₘₐₓ von 180° liegt die Luftleiteinrichtung bzw. liegen die Flügelabschnitte der Luftleiteinrichtung im Wesentlichen mit der Tragwerksstruktur in einer Ebene. Dabei können der im Streckenflugbetrieb in Flugrichtung weisende Flügelabschnitt der Luftleiteinrichtung (Anströmflügel) als auch der im Streckenflugbetrieb entgegen der Flugrichtung weisende Flügelabschnitt der Luftleiteinrichtung (Abströmflügel)in beliebiger Richtung in der Ebene E der Tragwerksstruktur liegen.

Bei mehreren Luftleiteinrichtungen können die jeweiligen Anstellwinkel β₁₋ₙ unabhängig voneinander variierbar sein, wobei für jede Luftleiteinrichtung ein minimaler Anstellwinkel β_{1-n,min} und ein maximaler Anstellwinkel β_{1-n,max} festgelegt ist. Die minimalen Anstellwinkel β_{1-n,min} und maximalen Anstellwinkel β_{1-n,max} der Luftleiteinrichtungen können gleich oder voneinander verschieden sein.

Zu Änderung der Anstellwinkel β₁₋ₙ können die Luftleiteinrichtungen z. B. jeweils um ihre Längsachse L drehbar in der Tragwerksstruktur gelagert sein, wobei die Längsachse L der Luftleiteinrichtung der Lagerachse entspricht.

Optional können die Luftleiteinrichtungen gegenüber der Tragwerksstruktur linear verfahrbar ausgebildet sein. Beispielsweise können die tragflächenartigen Luftleiteinrichtungen an die Tragwerksstruktur angeklappt und von dieser abgeklappt werden.

Durch die Variation der Anstellwinkel β₁₋ₙ kann die Auftriebsfunktion der Flugeinheit entsprechend den Strömungsverhältnissen beeinflusst werden. Werden die Luftleiteinrichtungen mit jeweils verschieden großen Anstellwinkeln ß₁₋ₙ ausgerichtet, kann zudem die Lenkfunktion des Fluggeräts beeinflusst werden.

Die Luftleiteinrichtungen können die Auftriebswirkung der Flugeinheit unterstützen und im Weiteren als Lenk- und Flughilfsmittel dienen. Dies kann die Effizienz des Fluggeräts verbessern und zur Stabilisierung und/oder Verbesserung der Strömungseigenschaften und damit der Steuerbarkeit des Fluggeräts beitragen.

Weiterhin weist das Fluggerät eine Transporteinheit mit einer Beförderungskapsel, welche der Umhüllung der zu transportierenden Personen und/oder Lasten dient, und mit einer Verbindungseinrichtung zur Verbindung der Beförderungskapsel mit der Flugeinheit auf. Die Verbindungseinrichtung weist einen längserstreckten Schaft auf, der einen Endes an die Beförderungskapsel anschließt.

Der Schaft kann beispielsweise als eine gerade verlaufende Stange mit z. B. einem rechteckigen Querschnitt mit über den Umfang der Stange gerundeten Kanten oder mit einem runden oder ovalen Stangenquerschnitt ausgebildet sein.

Der Schaft kann vorzugsweise im Wesentlichen rotationssymmetrisch ausgebildet sein, also beispielsweise die Form eines geraden Kreiszylinders, aufweisen, wobei die Längserstreckung des Zylinders der Länge l des Schaftes entspricht und die Grund- und Deckfläche des Zylinders auch als Schmalseite bezeichnet sein können.

Bevorzugt kann der Schaft möglichst dünn sein, d. h. einen geringen Durchmesser aufweisen. Eine möglichst dünne und rotationssymmetrische Ausführung des Schafts verringert die Masse und den Luftwiderstand des Schaftes und damit der Transporteinheit deutlich.

Die Beförderungskapsel ist derart geformt, dass sie in die Schmalseite des längserstreckten Schafts mündet. Die Schmalseite des Schaftes kann zur Verbesserung der Aerodynamik bevorzugt achsmittig bezüglich der Beförderungskapsel angeordnet sein. Durch die achsmittige Anordnung des Schaftes in Bezug zur Beförderungskapsel kann die Biegebelastung des Schaftes minimiert werden.

Bevorzugt kann die Verbindung zwischen Beförderungskapsel und Schaft starr ausgebildet sein. Beispielsweise können Beförderungskapsel und Schaft miteinander stoffschlüssig verbunden, z. B. verschweißt, sein.

Durch die Ausbildung eines längserstreckten Schaftes und der Befestigung der Beförderungskapsel an diesem Schaft kann vorteilhaft die Einhaltung eines bestimmten Abstands zwischen Beförderungskapsel und Flugeinheit erreicht werden.

Insbesondere kann die Länge l des Schafts bzw. kann bei einem längenvariierbaren Schaft die minimale Länge lₘᵢₙ des Schafts derart gewählt sein, dass die Einhaltung eines Sicherheitshöhenabstands zwischen der Beförderungskapsel und der Flugeinheit gewährleistet werden kann. Der Sicherheitshöhenabstand kann derart bestimmt sein, dass eine die Transporteinheit benutzende erwachsene Person aus dem Stand die Kupplungseinrichtung und die Flugeinheit nicht berühren kann. Der Sicherheitshöhenabstand kann - ausgehend von einer nutzbaren Höhe der Beförderungskapsel von beispielsweise 2 m - mindestens 0,5 m, bevorzugt 1,0 m und weiter bevorzugt 1,5 m betragen.

Dadurch kann die Gebrauchssicherheit deutlich erhöht werden, indem ein unerwünschter Kontakt zwischen der agierenden oder zu befördernden Person und/oder Last und der Flugeinheit effektiv vermieden werden kann. Zudem trägt die Einhaltung eines bestimmten Abstands zur Verringerung der Lärmbelästigung für die zu befördernden Personen bei.

Außerdem kann durch die beabstandete Anordnung der Beförderungskapsel von der Flugeinheit die Beförderungskapsel außerhalb des Abwindes der Propeller des Flugmoduls platziert sein, was zu einer Verringerung des Luftwiderstands und einer Verbesserung der Aerodynamik führt.

Die Beförderungskapsel kann bevorzugt eine aerodynamisch günstige Form aufweisen, z. B. rotationssymmetrisch und/oder im Wesentlichen tropfenförmig ausgebildet sein, so dass im Flugbetrieb zum einen der statische Luftwiderstand der Beförderungskapsel und zum anderen die Beeinflussung der Strömung um die Beförderungskapsel durch den Rotorenbetrieb der Flugeinheit (dynamische Luftwiderstand) weiter verringert werden kann. Die Tropfenform der Beförderungskapsel kann deshalb bevorzugt im Wesentlichen in Richtung der senkrechten Mittelachse M der Flugeinheit erstreckt sein.

Die Tropfenform der Beförderungskapsel kann in den längserstreckten Schaft münden, d. h. die Beförderungskapsel kann einen unteren breiten, abgerundeten Bereich aufweisen, der sich in einem oberen, schlanken Bereich in Richtung des Schafts verjüngt. Vorzugsweise kann zur Erzeugung einer günstigen aerodynamischen Form die Beförderungskapsel einen Anschlussbereich zum Anschluss des Schaftes mit einer Querschnittsverjüngung zum Übergang auf den Querschnitt des Schaftes aufweisen.

Die Tropfenform kann in der Breite, z. B. quer zu einer Hauptflugrichtung des Fluggeräts, reduziert sein, um einen möglichst geringen Luftwiderstand im Streckenflugbetrieb zu erzeugen.

Darüber hinaus weist das erfindungsgemäße Fluggerät eine Gelenkkupplungseinrichtung zur Verbindung der Flugeinheit mit einem anderen Ende des längserstreckten Schafts der Transporteinheit auf.

Mit dem anderen Ende des längserstreckten Schafts ist dabei das der Beförderungskapsel gegenüberliegende Ende gemeint. Mit anderen Worten kann die Gelenkkupplungseinrichtung die zweite der beiden Schmalseiten des Schaftes mit der Flugeinheit verbinden.

Die Ausbildung der Kupplungseinrichtung als Gelenkkupplungseinrichtung ermöglicht eine Winkel- bzw. Neigungseinstellung zwischen der Flugeinheit und der Transporteinheit in verschiedenen Flugphasen, z. B. Startphase, Streckenflugphase und Landephase.

Der Neigungswinkel α der Flugeinheit ist als der kleinere Winkel oder bei gleichgroßen Winkeln als einer der beiden gleichgroßen Winkel definiert, welcher von einer Schwerkraftlinie S, die senkrecht zur Erdoberfläche verläuft, und der Ebene E der Tragwerksstruktur der Flugeinheit eingeschlossen wird. Eine Schwerkraftlinie S verläuft entlang der Wirkrichtung der auf das Fluggerät einwirkenden Gravitationskraft, also immer senkrecht zur Erdoberfläche. Die Gravitationskraft ist dabei die durch die Wirkung des Gravitationsfeldes der Erde verursachte Kraft, die auf das Fluggerät einwirkt.

Im engeren Sinne kann die Schwerkraftlinie S einer Längsachse L_{S} des Schafts entsprechen, wenn die Transporteinheit in bezüglich der Erdoberfläche vertikaler Ausrichtung an der Flugeinheit angeordnet ist. Mit anderen Worten wird der Neigungswinkel α bei α < 90° unabhängig von der Flugrichtung des Fluggeräts zwischen der Ebene E in dem nach unten, also in Richtung der Erdoberfläche, geneigten Bereich der Tragwerksstruktur und der Schwerkraftlinie S bestimmt. Daraus ergibt sich, dass die Summe aus Neigungswinkel α und dem Winkel, der zwischen der Schwerkraftlinie S und der Mittelachse M der Flugeinheit eingeschlossen wird, stets 90° beträgt.

Es ist vorgesehen, dass ein einstellbarer Neigungswinkel α zwischen einem minimalen Neigungswinkel αₘᵢₙ und einem maximalen Neigungswinkel αₘₐₓ variierbar ist.

Hierbei ist vorgesehen, dass der minimale Neigungswinkel αₘᵢₙ in einem Bereich 0° ≤ αₘᵢₙ < 30° liegt. Aus der Definition des Neigungswinkels α ergibt sich, dass der maximale Neigungswinkel αₘₐₓ = 90° beträgt.

Bevorzugt kann der minimale Neigungswinkel αₘᵢₙ in einem Bereich 0° ≤ αₘᵢₙ < 10° liegen. Besonders bevorzugt kann sich der minimale Neigungswinkel αₘᵢₙ Null annähern oder Null sein. Bei dem maximalen Neigungswinkel αₘₐₓ = 90° ist die Ebene E der Tragwerksstruktur senkrecht zur Schwerkraftlinie S und folglich parallel zur Erdoberfläche angeordnet. In diesem Zustand kann die Schwerkraftlinie S genau der Mittelachse M der Flugeinheit entsprechen. Bei Beschleunigung des Fluggeräts und während des Streckenflugs kann die Ebene E der Tragwerksstruktur in Flugrichtung nach unten geneigt werden, d. h. es wird ein Neigungswinkel α < 90° eingestellt. Beim Abbremsen des Fluggeräts oder zum Rückwärtsflug kann die Ebene E der Tragwerksstruktur in Flugrichtung nach oben geneigt werden, wobei sich ebenfalls ein Neigungswinkel α < 90° ergibt. Ebenso ist eine Seitwärtsneigung der Ebene E unter Einstellung eines Neigungswinkels α < 90° möglich.

Die Einstellung des Neigungswinkels α kann mittels eines in der Gelenkkupplungseinrichtung angeordneten Servomotors erfolgen. Ein solcher Servomotor kann vorteilhaft eine genaue Winkeleinstellung auch bei großer Krafteinwirkung auf die Transporteinheit, vorliegend z. B. bei einer resultierenden Krafteinwirkung aus Gewichts- und Windkraft, ermöglichen. Der Servomotor kann mit einem Servoregler zu einem Servoantrieb kombiniert sein.

Die Gelenkkupplungseinrichtung kann mit einem Dämpfungsmittel zur Einstellung der Beweglichkeit / Schwingung der Gelenkkupplungseinrichtung ausgebildet sein.

Für diese Einstellbarkeit der Gelenkkupplungseinrichtung kann das Dämpfungsmittel beispielsweise ein ring- oder scheibenförmiges Haftreibelement (Kupplungsscheibe) und vorzugsweise zwei unter Vorspannkraft verfahrbare, beidseitig an die Kupplungsscheibe andrückbare Kupplungsbacken oder Kupplungsschalen aufweisen, welche dazu ausgebildet sind gemeinsam einen Reibschluss zu erzeugen.

Entsprechend der ausgeübten Andruckkraft der Kupplungsbacken / Kupplungsschalen kann eine Reibwertverstellung des Reibschlusses der Gelenkkupplungseinrichtung steuerbar eingestellt werden, z. B. über einen Gleitreibwert, bei der die Gelenckupplungseinrichtung vollständig lose beweglich ist (Gleitkupplung), über einen erhöhten Haftreibwert, bei der die Gelenkkupplungseinrichtung in einem Rutschbereich gegen einen einstellbaren Widerstand rutschen kann (Rutschkupplung) bis hin zu einem sehr hohen Haftreibwert, welcher eine starre Kupplung mit einer drehfesten Winkelverbindung zwischen Flugeinheit und Beförderungskapsel realisieren kann.

Das Dämpfungsmittel der Gelenkkupplungseinrichtung kann beispielsweise zur Dämpfung des Schwingverhaltens der Transporteinheit unter Windlast und/oder während der Einstellung des Neigungswinkels α der Transporteinheit bezüglich der Flugeinheit genutzt werden, indem ein entsprechender Widerstand (Haftreibwert) der Rutschkupplung eingestellt wird.

Weitere Dämpfungselemente, die sich ggf. störend auf den Kupplungsvorgang auswirken könnten, können daher entbehrlich sein.

Durch die Variation des Neigungswinkels α und insbesondere die Möglichkeit einen minimalen Neigungswinkel αₘᵢₙ in einem Bereich 0° ≤ αₘᵢₙ < 30°, bevorzugt 0° ≤ αₘᵢₙ < 10°, weiter bevorzugt αₘᵢₙ → 0°, einstellen zu können, kann die Flugeinheit während des Streckenflugs nahezu senkrecht zur Erdoberfläche, also parallel zur Schwerkraftlinie S, ausgerichtet werden.

Zusammen mit einer geeigneten Variation der Anstellwinkel β₁₋ₙ der Luftleiteinrichtungen kann dadurch ein Gleitflug erreicht werden, der sich durch eine besonders hohe Energieeffizienz auszeichnet. Hierbei dienen die Antriebseinheiten insbesondere dem Vortrieb, während der Auftrieb überwiegend durch die entsprechend positionierten Luftleiteinrichtungen erzeugt wird. Die hohe Energieeffizienz ermöglicht bei gegebenem Energiespeicher das Absolvieren längerer Flugstrecken bzw. eine Verkleinerung des Energiespeichers und damit eine Kosten- und Gewichtsersparnis bei gegebener Flugstrecke.

Weiterhin ermöglicht die Variation des Neigungswinkels α eine im Wesentlichen vertikale Ausrichtung der Transporteinheit in Richtung der Schwerkraftlinie S auch bei nicht-paralleler Ausrichtung der Flugeinheit bezüglich der Erdoberfläche. Dadurch kann das Flugerlebnis für die zu transportierenden Personen komfortabler gestaltet werden und die Fixierung von Lasten in der Beförderungskapsel kann entbehrlich oder zumindest vereinfacht sein.

Bevorzugt können die Anstellwinkel β₁₋ₙ der Luftleiteinrichtungen und der Neigungswinkel α der Flugeinheit voneinander abhängig variierbar sein.

Bei Neigung der Flugeinheit gegenüber der Schwerkraftlinie S kann durch geeignete Variation der Anstellwinkel β₁₋ₙ ein durch die Neigung der Flugeinheit verringerter Auftrieb wieder erhöht werden. Bei Beschleunigung des Fluggeräts mit in Flugrichtung nach unten geneigter Ebene E der Tragwerksstruktur (α < 90°) können zur Stützung des Auftriebs die Luftleiteinrichtungen gegenläufig angestellt werden, z. B. mit einem Anstellwinkel β₁₋ₙ im Bereich von etwa 90° bis 135°. Beim Abbremsen des Flugmoduls mit in Flugrichtung nach oben geneigter Ebene E der Tragwerksstruktur (α > 90°) können zur Stützung des Auftriebs die Luftleiteinrichtungen ebenfalls hierzu gegenläufig, z. B. mit einem Anstellwinkel β₁₋ₙ von etwa 90° bis 135°, angestellt werden.

Mit derartigen Auftriebshilfen kann nicht nur der Auftrieb des Fluggeräts verbessert und damit die Propellerleistung reduziert und Energie eingespart werden, sondern u. a. auch die Steuerbarkeit und Flugstabilität des Fluggerätes verbessert werden.

Gemäß verschiedenen Ausführungsvarianten kann die Gelenkkupplungseinrichtung entlang der Tragwerksstruktur parallel zur Ebene E zwischen einer zentrischen Position und einer äußeren Position verschiebbar sein.

Unter einer zentrischen Position kann dabei eine Position im Bereich der Mittelachse M des Fluggeräts verstanden werden, wobei die Mittelachse M durch den Schwerpunkt bzw. Massenmittelpunkt der Tragwerksstruktur verläuft. Die Mittelachse M kann einer Symmetrieachse der Tragwerksstruktur entsprechen. Beispielsweise kann die Mittelachse M durch die Gelenkkupplungseinrichtung verlaufen, wenn diese in der zentrischen Position angeordnet ist.

Unter einer äußeren Position kann jede außerzentrische Position an der Tragwerksstruktur außerhalb des Bereichs der Mittelachse M verstanden werden, beispielsweise eine Position an einem radial äußeren Ende der Tragwerksstruktur, also einem von der Mittelachse M möglichst weit entfernten Ende der Tragwerksstruktur bzw. an einer äußeren Begrenzung der Tragwerksstruktur.

Die genaue Lage der äußeren Position bezüglich der Tragwerksstruktur kann abhängig von der Länge l des Schafts bzw. dem Abstand zwischen Gelenkkupplungseinrichtung und Beförderungskapsel sein. Beispielsweise kann sich die äußere Position derart entfernt von einer Mittelachse M der Flugeinheit befinden, dass sich die Beförderungskapsel bei dem minimalen Neigungswinkel αₘᵢₙ außerhalb einer äußeren Begrenzung der Tragwerksstruktur befindet.

Einerseits sollte die äußere Position derart weit entfernt von der Mittelachse M gewählt werden, dass bei dem minimalen Neigungswinkel αₘᵢₙ die Beförderungskapsel ausreichend weit von der Transporteinheit entfernt ist, also z. B. ein Sicherheitshöhenabstand eingehalten wird. Andererseits sollte die äußere Position möglichst nah an der Mittelachse M gewählt werden, so dass ein möglichst kompaktes Fluggerät ausgebildet wird, dessen Flugeigenschaften besser kontrollierbar sind.

Ist der Schaft wie nachfolgend beschrieben längenvariabel ausgebildet, so kann dies bei der Festlegung der äußeren Position berücksichtigt werden. Die Gelenkkupplungseinrichtung sollte dann soweit nach außen verschiebbar sein, dass bei maximaler Länge lₘₐₓ des Schafts die vorstehend genannten Kriterien erfüllt werden.

Die Verschiebung der Gelenkkupplungseinrichtung kann beispielsweise entlang eines Tragwerksbalkens, entlang zweier einander gegenüberliegender Tragwerksbalken oder auch entlang aller Tragwerksbalken ermöglicht sein. Dadurch kann die Verschiebung auch dazu genutzt werden, um auf vorherrschende Windverhältnisse zu reagieren und z. B. eine Neigung der Beförderungskapsel durch Seitenwind auszugleichen und/oder um eine bessere Lastverteilung zu ermöglichen.

Die Verschiebbarkeit der Gelenkkupplungseinrichtung kann beispielsweise mittels einer Linearantriebseinheit realisiert sein. Die Linearantriebseinheit kann z. B. eine lineare Schiebeeinrichtung mit einem an der Tragwerksstruktur angeordneten Schienensystem umfassen, in oder an dem ein Schlitten beweglich, z. B. unter Nutzung eines Kugellagers, gelagert ist, welcher die Gelenkkupplungseinrichtung trägt.

Der Antrieb der linearen Schiebeeinrichtung kann beispielsweise mittels einer angetriebenen Spindel, die durch eine drehbare Zahnstange oder eine Gewindestange gebildet ist, oder mittels eines umlaufend angetriebenen Zahnriemens erfolgen, wobei der Antrieb dieser Übertragungsmittel elektrisch, z. B. durch einen Servomotor, erfolgen kann. Alternativ kann der Antrieb der lineare Schiebeeinrichtung auch magnetisch oder elektromagnetisch ausgebildet sein.

Eine solche Linearantriebseinheit kann vorteilhaft eine starke Beschleunigung, Abbremsung und schnelle Betriebsumschaltung realisieren und damit einen schnellen Richtungswechsel ermöglichen.

Bevorzugt kann vorgesehen sein, dass die Gelenkkupplungseinrichtung in Abhängigkeit des Neigungswinkels α entlang der Tragwerksstruktur parallel zur Ebene E verschiebbar ist. Zusammen mit der Gelenkkupplungseinrichtung verschiebt sich auch die damit verbundene Transporteinheit.

Die Verschiebbarkeit der Gelenkkupplungseinrichtung ermöglicht also vorteilhaft eine Positionsänderung der Transporteinheit bezüglich der Flugeinheit bzw. deren Tragwerksstruktur. Beispielsweise kann die Gelenkkupplungseinrichtung derart entlang der Tragwerksstruktur parallel zur Ebene E verschiebbar sein, dass sich die Beförderungskapsel bei dem minimalen Neigungswinkel αₘᵢₙ radial außerhalb der Flugeinheit befindet.

Anders ausgedrückt ermöglicht die Positionsänderung der Transporteinheit eine annähernd vertikale Ausrichtung der Ebene E der Tragwerksstruktur bezüglich der Erdoberfläche, so dass die Auftriebswirkung der Luftleiteinrichtungen durch entsprechende Einstellung der Anstellwinkel β₁₋ₙ optimal, d. h. energieeffizient, genutzt werden kann.

Gemäß weiteren Ausführungsvarianten kann eine Länge l des längserstreckten Schafts zwischen einer minimalen Länge lₘᵢₙ und einer maximalen Länge lₘₐₓ variierbar ausgebildet sein.

Die maximale Länge lₘₐₓ des Schafts kann derart lang sein, dass sich die Beförderungskapsel bei dem minimalen Neigungswinkel αₘᵢₙ außerhalb einer äußeren Begrenzung der Tragwerksstruktur, also radial außerhalb der Flugeinheit, befindet. Beispielsweise kann die maximale Länge lₘₐₓ größer oder gleich dem Radius der äußeren Begrenzung der Tragwerksstruktur sein.

Bevorzugt kann vorgesehen sein, dass die Länge l des Schafts in Abhängigkeit des Neigungswinkels α variierbar ist. Beispielsweise kann der längserstreckte Schaft derart längenvariabel ausgebildet sein, dass seine Länge l mit abnehmendem Neigungswinkel α zunimmt.

Die Längenverstellbarkeit des Schafts ermöglicht eine annähernd vertikale Ausrichtung der Ebene E der Tragwerksstruktur, so dass die Auftriebswirkung der Luftleiteinrichtungen durch entsprechende Einstellung der Anstellwinkel β₁₋ₙ optimal, d. h. energieeffizient, genutzt werden kann.

Die Variierung der Länge l des Schafts kann ebenfalls mittels einer Linearantriebseinheit erfolgen. Diesbezüglich wird auf die obigen Ausführungen zur Linearantriebseinheit, mit der die Verschiebbarkeit der Gelenkkupplungseinrichtung realisiert werden kann, verwiesen.

Gemäß weiteren Ausführungsvarianten kann vorgesehen sein, dass die Tragwerksstruktur der Flugeinheit und die Verbindungseinrichtung der Transporteinheit über eine Dämpfungseinrichtung miteinander verbunden sind.

Die Dämpfungseinrichtung dient der Abfederung der während der Änderung des Neigungswinkels α auftretenden Kräfte, so dass die Änderung des Neigungswinkels α keine oder allenfalls geringe negative Auswirkungen auf die zu transportierenden Personen und/oder Lasten darstellt.

Die Dämpfungseinrichtung kann beispielsweise als Federdämpfelement, z. B. als Gasdruckfeder oder Öldruckfeder, ausgeführt sein.

Gemäß weiteren Ausführungsvarianten kann vorgesehen sein, dass an der Tragwerksstruktur eine Arretiereinrichtung, ausgebildet zum Arretieren des längserstreckten Schafts, angeordnet ist.

Bevorzugt kann die Arretiereinrichtung an einem radial äußeren Ende der Tragwerksstruktur angeordnet sein, da sich dadurch günstigere Hebelverhältnisse ergeben können.

Die Arretierung des Schafts an der Tragwerksstruktur kann zu einer Erhöhung der mechanischen Stabilität des Fluggeräts beitragen.

Gemäß weiteren Ausführungsvarianten kann vorgesehen sein, dass die Flugeinheit und die Transporteinheit modular ausgebildet sind, so dass die Flugeinheit und eine beliebige Transporteinheit mittels der Gelenkkupplungseinrichtung beliebig, z. B. wiederholt, miteinander verbindbar und trennbar sind.

Hierzu können ein erster Teil der Gelenkkupplungseinrichtung an der Flugeinheit und ein zweiter Teil der Gelenkkupplungseinrichtung als Gegenstück am anderen Ende des längserstreckten Schafts der Transporteinheit ausgebildet sein. Folglich kann mittels der Gelenkkupplungseinrichtung eine lösbare Verbindung zwischen dem Schaft und der Flugeinheit realisiert werden.

Bevorzugt kann die Gelenkkupplungseinrichtung als selbsttätige, d. h. automatische, Kupplungseinrichtung ausgebildet sein. Dadurch ist ein Kuppeln der Flugeinheit bzw. des Flugmoduls mit der Transporteinheit bzw. dem Transportmodul automatisiert möglich. Der Kupplungsvorgang kann zügig und sicher durchgeführt werden, da sich ein manuelles Kuppeln erübrigt.

Die Gelenkkupplungseinrichtung kann steuerbar ausgebildet sein, so dass eine Fernsteuerung des Kupplungsvorgangs ermöglicht werden kann. Zudem kann das An- oder Abkuppeln abhängig von verschiedenen Bedingungen durchgeführt werden. Beispielsweise kann ein Abkuppeln nur möglich sein, falls die Beförderungskapsel Bodenkontakt hat. Dies kann zu einer Erhöhung der Sicherheit beitragen.

Der modulare Aufbau ermöglicht eine flexible Kombination von Transport- und Flugeinheiten. Mit anderen Worten können verschiedenartige Transport- und/oder Flugeinheiten gegeneinander ausgetauscht werden.

Beispielsweise kann eine erste Transporteinheit zum Transport von Personen ausgebildet sein, während eine zweite Transporteinheit zum Lastentransport ausgebildet ist. Ebenso können unterschiedliche Flugeinheiten an dieselbe Transporteinheit gekuppelt werden. Die Transporteinheiten können sich beispielsweise in der Anzahl und/oder Anordnung der Antriebseinheiten voneinander unterscheiden. So können z. B. in Abhängigkeit der zu transportierenden Last und/oder der Flugbedingungen (Windstärke und -richtung, Höhenlage etc.) Flugeinheiten mit mehr oder weniger Antriebseinheiten ausgewählt werden.

Ein weiterer Aspekt der Erfindung betrifft ein Verfahren nach Anspruch 16 zum Betreiben eines Fluggeräts gemäß vorstehender Beschreibung, bei dem das Fluggerät zumindest in einer Startphase, einer Streckenflugphase und einer Landephase betreibbar ist. Mithin werden auch mit dem erfindungsgemäßen Verfahren die Vorteile des erfindungsgemäßen Fluggeräts erreicht. Sämtliche Ausführungen bezüglich des erfindungsgemäßen Fluggeräts lassen sich analog auf das erfindungsgemäße Verfahren übertragen.

Das Verfahren sieht vor, dass während des Übergangs von der Startphase zur Streckenflugphase bei variablen Anstellwinkeln β₁₋ₙ der Luftleiteinrichtungen der Neigungswinkel α der Flugeinheit verringert wird, und dass während des Übergangs von der Streckenflugphase zur Landephase bei variablen Anstellwinkeln β₁₋ₙ der Luftleiteinrichtungen der Neigungswinkel α der Flugeinheit vergrößert werden.

Beispielsweise kann der Neigungswinkel α verringert werden, indem der minimale Neigungswinkel αₘᵢₙ eingestellt werden. Der Neigungswinkel α kann beispielsweise vergrößert werden, indem der maximale Neigungswinkel αₘₐₓ eingestellt wird.

Das Verfahren sieht in vorteilhaften Ausführungen vor, dass während der Startphase die Anstellwinkel β₁₋ₙ einer bestimmten Anzahl der Luftleiteinrichtungen gering, z. B. minimal sind oder verringert, z. B. minimiert, werden, so dass Anstellwinkel β₁₋ₙ einer bestimmten Anzahl der Luftleiteinrichtungen vorzugsweise in einem Bereich eines minimalen Anstellwinkels β_{1-n,min} von 90° ≤ β_{1-n,min} ≤ 120° vorliegen.

Das Verfahren sieht in einer weiteren vorteilhaften Ausführung vor, dass während der Landephase die Anstellwinkel β₁₋ₙ einer bestimmbaren Anzahl der Luftleiteinrichtungen groß, z. B. maximal, sind oder vergrößert, z. B. maximiert werden, so dass Anstellwinkel β₁₋ₙ einer bestimmten Anzahl der Luftleiteinrichtungen vorzugsweise in einem Bereich eines maximalen Anstellwinkels β_{1-n,max} von 150° ≤ β_{1-n,max} ≤ 180° vorliegen.

Optional können während des Übergangs von der Startphase zur Streckenflugphase der Schaft verlängert und/oder die Gelenckupplungseinrichtung entlang der Tragwerksstruktur parallel zur Ebene E in eine äußere Position verschoben werden. Während des Übergangs von der Streckenflugphase zur Landephase können der Schaft verkürzt und/oder die Gelenkkupplungseinrichtung entlang der Ebene E der Tragwerksstruktur in eine zentrische Position verschoben werden.

Ein Flugvorgang des Fluggeräts kann beispielsweise mit den folgenden Vorgängen verbunden sein.

Nach der Inbetriebnahme des geparkten Fluggeräts wird dieses gestartet und zunächst in einer Startphase betrieben. Die Startphase ist durch einen im Wesentlichen senkrechten Startflug gekennzeichnet und dient vorrangig dem Höhengewinn des Fluggeräts. Während der Startphase können die Anstellwinkel β₁₋ₙ einer bestimmten Anzahl der Luftleiteinrichtungen groß sein, beispielsweise ca. 180° (Luftleiteinrichtungen an der Tragwerksstruktur nahezu anliegend), vorzugsweise können die Anstellwinkel β₁₋ₙ zumindest einer bestimmten Anzahl der Luftleiteinrichtungen klein sein, beispielsweise ca. 90° - 120° (Luftleiteinrichtungen nahezu senkrecht gestellt).

Der Neigungswinkel α ist hier üblicherweise im Wesentlichen maximal bei ca. 90°(im Wesentlichen Horizontalstellung der Flugeinheit in Bezug auf die Erdoberfläche).

Eine geringe Abweichung des Neigungswinkels α von 90 ° in dieser Startphase kann beispielsweise durch anliegenden Winddruck verursacht sein.

Kleine Anstellwinkel β₁₋ₙ von einer bestimmten Anzahl der Luftleiteinrichtungen in der Startphase bei zugleich großem Neigungswinkel α (im Wesentlichen horizontale Ausrichtung der Flugeinheit in Bezug auf die Erdoberfläche) ermöglichen ein luftwiderstandsarmes und damit verbessertes Aufsteigen des Fluggerätes während des Startens.

Bei einem längenverstellbaren Schaft ist die Länge l des Schafts kurz, z. B. minimal. Bei einem Fluggerät mit verschiebbarer Gelenkkupplungseinrichtung befindet sich die Gelenkkupplungseinrichtung in einer zentrischen Position.

Nach der Startphase erfolgt der Übergang zur Streckenflugphase, die durch eine im Wesentlichen horizontale Bewegung bezüglich der Erdoberfläche gekennzeichnet ist. Sie dient vorrangig dem Zurücklegen der Entfernung zwischen Start- und Landeort. Während des Übergangs von der Startphase zur Streckenflugphase wird zumindest der Neigungswinkel α der Flugeinheit verringert, z. B. die jeweils minimalen Winkel β_{1-n,min}, αₘᵢₙ erreicht werden. Zudem kann der Schaft verlängert und/oder die Gelenckupplungseinrichtung entlang der Tragwerksstruktur parallel zur Ebene E in eine äußere Position verschoben werden.

Während der Streckenflugphase wird das Fluggerät - je nach Neigungswinkel α der Flugeinheit - vorzugsweise mit kleinen, z. B. minimalen, Anstellwinkeln β₁₋ₙ bis mittleren Anstellwinkeln β₁₋ₙ betrieben, um die Luftleiteinrichtungen bzw. deren angeströmten Flügelabschnitte (Anströmflügel) in strömungsgünstiger Lage in Flugrichtung weisend auszurichten, während die Flugeinheit vorzugsweise mit kleinem, z. B. minimalem, Neigungswinkel α bis mittleren Neigungswinkel α betrieben wird. Die Länge l des Schafts ist groß, z. B. maximal, und die parallel zur Ebene E verschobene Gelenkkupplungseinrichtung befindet sich in einer äußeren Position.

Zum Landen des Fluggeräts erfolgt ein Übergang von der Streckenflugphase zur Landephase, die durch einen im Wesentlichen senkrechten Landeflug gekennzeichnet ist und vorrangig dem Höhenverlust des Fluggeräts dient. Während des Übergangs von der Streckenflugphase zur Landephase wird zumindest der Neigungswinkels α vergrößert, und zumindest eine bestimmte Anzahl der Luftleiteinrichtungen vorzugsweise nahe an die Ebene E der Tragwerksstruktur anliegend gestellt bis z. B. zum Erreichen der jeweils maximalen Winkel β_{1-n,max}, αₘₐₓ. Zudem kann der Schaft verkürzt und/oder die Gelenkkupplungseinrichtung entlang der Tragwerksstruktur parallel zur Ebene E in eine zentrische Position verschoben werden.

In der sich anschließenden Landephase kann das Fluggerät mit z.B. großen, bis maximalen Anstellwinkeln β₁₋ₙ einer bestimmten Anzahl von Luftleiteinrichtungen von ca. 150 bis 180° und mit einem vorzugsweise maximalen Neigungswinkel der Flugeinheit αₘₐₓ = 90° betrieben werden.

Eine derart flach an der Ebene E der Tragwerksstruktur anliegende Stellung der Luftleiteinrichtungen bei zugleich im Wesentlichen horizontaler Ausrichtung der Flugeinheit in Bezug auf die Erdoberfläche erzeugt in der Landephase einen höheren Luftwiderstand und kann somit ein verbessertes Abbremsen des Fluggerätes während der Landephase ermöglichen.

Eine erneute Startphase kann dann mit unverändertem großem Neigungswinkel α und mit unveränderten großen oder vorzugsweise mit geänderten kleinen Anstellwinkeln β₁₋ₙ erfolgen. Die Länge l des Schafts ist kurz, z. B. minimal, und die Gelenckupplungseinrichtung befindet sich in einer zentrischen Position.

Ein weiterer Aspekt der Erfindung betrifft ein Fluggerät mit einer Steuereinheit zur Steuerung eines Fluggeräts gemäß vorstehender Beschreibung. Die Steuereinheit ist dazu eingerichtet und ausgebildet, Steuersignale, die ein Einstellen des Neigungswinkels α und/oder ein Einstellen der Anstellwinkel β₁₋ₙ bewirken, zu generieren und auszugeben.

Optional kann die Steuereinheit dazu eingerichtet und ausgebildet sein, Steuersignale, die eine Längenänderung des längserstreckten Schafts und/oder ein Ändern einer Verschiebeposition der Gelenkkupplungseinrichtung entlang der Tragwerksstruktur parallel zur Ebene E bewirken, zu generieren und auszugeben.

Die Steuersignale werden an die entsprechenden Aktoren, also z. B. Antriebseinrichtungen, ausgegeben, die die beabsichtigten Winkel-, Längen- bzw. Positionsänderungen bewirken können. Die Steuersignale können beispielsweise bewirken, dass das Fluggerät eines der vorstehend beschriebenen Verfahren ausführt. Mithin werden auch mit der erfindungsgemäßen Steuereinheit die Vorteile des erfindungsgemäßen Fluggeräts erreicht. Sämtliche Ausführungen bezüglich des erfindungsgemäßen Fluggeräts lassen sich analog auf die erfindungsgemäße Steuereinheit übertragen.

Die Steuereinheit kann hardware- und/oder softwaremäßig realisiert sein und physisch ein- oder mehrteilig ausgebildet sein. Die Steuereinheit kann Teil einer Motorsteuerung des Fluggeräts sein oder in diese integriert sein.

Die Steuereinheit kann Sensorsignale, z. B. von Sensoren zur Überwachung der Anstellwinkel und des Neigungswinkels, und Steuereingaben, z. B. eines Piloten des Fluggeräts, der sich im Fluggerät oder außerhalb befinden kann, erhalten und diese Sensorsignale und/oder Steuereingaben basierend auf Anweisungen oder einem in der Steuereinheit programmierten Code entsprechend einer oder mehrerer Routinen verarbeiten. Anschließend sendet die Steuereinheit Steuersignale an Aktoren in Reaktion auf die verarbeiteten Sensorsignale und/oder Steuereingaben.

Dazu steht die Steuereinheit in einer signaltechnischen Wirkverbindung mit Aktoren des Fluggeräts, die z. B. eine Änderung der Anstellwinkel β₁₋ₙ, des Neigungswinkels α, der Länge l des Schafts und/oder eine Positionsänderung der Gelenkkupplungseinrichtung entlang der Tragwerksstruktur parallel zur Ebene E bewirken können. Die Steuereinheit kann intern im Fluggerät selbst oder extern, d. h. außerhalb des Fluggeräts, angeordnet sein. Bei einer externen Anordnung erfolgt die Datenübertragung kabellos, z. B. mittels Funkübertragung.

Weitere Vorteile der vorliegenden Erfindung sind aus den **Ab**bildungen sowie der zugehörigen Beschreibung ersichtlich. Es zeigen:
Figur 1 schematische Darstellung eines beispielhaften Fluggeräts mit verschiebbarer Gelenkkupplungseinrichtung in der Startphase in Seitenansicht;
Figur 2 schematische Darstellung des beispielhaften Fluggeräts der Figur 1 in Draufsicht;
Figur 3 schematische Darstellung des beispielhaften Fluggeräts beim Übergang von der Startphase zur Streckenflugphase;
Figur 4 eine weitere schematische Darstellung des beispielhaften Fluggeräts beim Übergang von der Startphase zur Streckenflugphase;
Figur 5 schematische Darstellung des beispielhaften Fluggeräts in der Streckenflugphase;
Figur 6 schematische Darstellung eines weiteren beispielhaften Fluggeräts mit längenvariablem Schaft in der Startphase;
Figur 7 schematische Darstellung des weiteren beispielhaften Fluggeräts beim Übergang von der Startphase zur Streckenflugphase; und
Figur 8 schematische Darstellung des weiteren beispielhaften Fluggeräts in der Streckenflugphase.

In den im Folgenden erläuterten Beispielen wird auf die beigefügten Zeichnungen Bezug genommen, die einen Teil der Beispiele bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres" usw. mit Bezug auf die Orientierung der beschriebenen Figuren verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Beispielsweise können die beiden Ausführungsformen "verschiebbare Gelenkkupplungseinrichtung" und "längenvariabler Schaft" miteinander kombiniert werden, so dass in einer Ausführungsvariante ein Fluggerät sowohl eine verschiebbare Gelenkkupplungseinrichtung als auch einen längenvariablen Schaft aufweist. Die folgende ausführliche Beschreibung ist deshalb nicht in einschränkendem Sinne aufzufassen, und der Schutzumfang der vorliegenden Erfindung wird durch die angefügten Ansprüche definiert. In den Figuren werden identische oder ähnliche Elemente mit identischen Bezugszeichen versehen, soweit dies zweckmäßig ist.

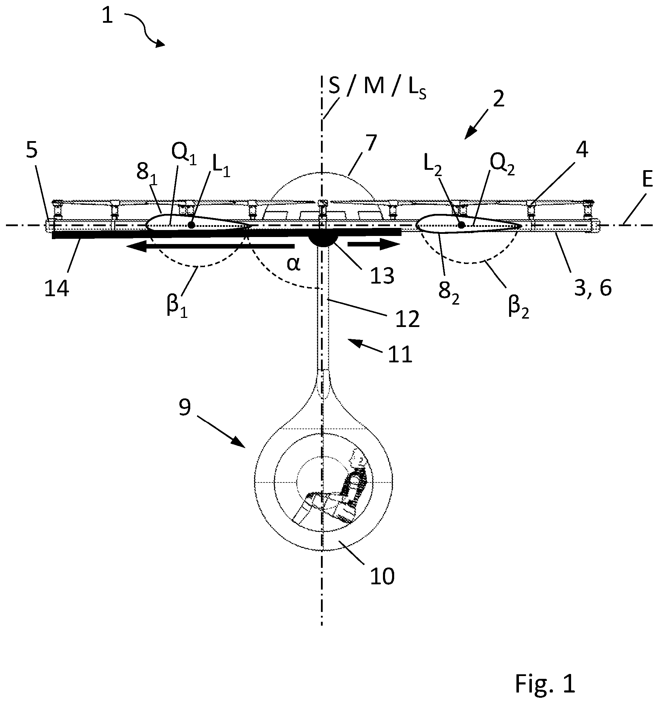

Die Figuren 1 bis 5 zeigen eine erste Ausführungsvariante eines senkrecht startenden und landenden Fluggeräts 1, das zum Transport von Personen und/oder Lasten genutzt werden kann. Das Fluggerät 1 umfasst eine Flugeinheit 2, eine Transporteinheit 9 sowie eine Gelenkkupplungseinrichtung 13 zur gelenkigen Verbindung der beiden Einheiten 2, 9.

Die Flugeinheit 2 weist neben einer mittig zur vertikalen Mittelachse M der Flugeinheit 2 angeordneten Steuereinheit 7 eine Tragwerksstruktur 3 mit mehreren Tragwerksbalken 6 auf, die an Knotenpunkten 5 untereinander mittels als T-Stücke ausgebildeten Verbindungsstücken sowie mit der Steuereinheit 7 verbunden sind. Die Tragwerksbalken 6 bestehen aus einem pultrudierten Hohlprofil aus faserverstärktem Kunststoff, z. B. kohlefaserverstärktem Kunststoff. Im Hohlprofil verlaufen Leitungen zur signaltechnischen Verbindung sowie Energieversorgung. Alternativ können auch andere Materialien für die Tragwerksbalken 6 genutzt werden.

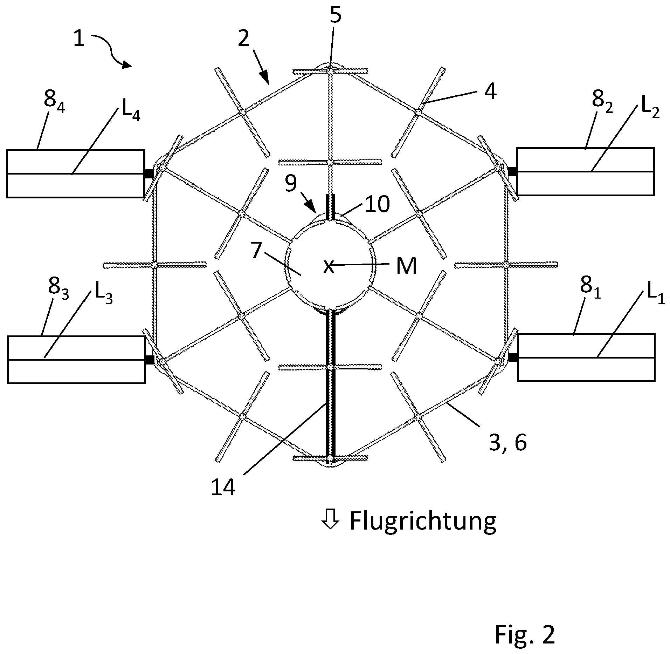

Die Tragwerksstruktur 3 wird durch sechs radial von der Steuereinheit 7 nach außen verlaufende Tragwerksbalken 6 sowie durch sechs weitere Tragwerksbalken 6 gebildet, welche die der Steuereinheit 7 gegenüberliegenden Enden der radial verlaufenden Tragwerksbalken 6 unter Ausbildung eines Sechsecks an den Knotenpunkten 5 miteinander verbinden und die äußere Begrenzung der Tragwerksstruktur 3 darstellen (siehe Figur 2).

Die Tragwerksstruktur 3 ist in der Ebene E erstreckt ausgebildet, d. h. die Ebene E entspricht der mittleren Querschnittsebene der Tragwerksstruktur 3.

An der Tragwerksstruktur 3 sind insgesamt achtzehn Antriebseinheiten 4 konzentrisch um die vertikale Mittelachse M der Flugeinheit 2 angeordnet. Die Antriebseinheiten 4 verfügen jeweils über einen Propeller mit einem Rotor aus zwei Rotorblättern und einen bürstenlosen Gleichstrommotor als Elektromotor, wobei der Propeller mittels des Elektromotors angetrieben wird. Mittels einer Nabe des jeweiligen Propellers ist dieser drehbar am Elektromotor gelagert. Selbstverständlich kann das Fluggerät 1 auch mit einer abweichenden Anzahl an Antriebseinheiten 4 oder anders gestalteten Antriebseinheiten 4, z. B. mit mehr als jeweils zwei Rotorblättern, angetrieben werden.

An der Tragwerksstruktur 3 sind außerdem vier tragflächenartig ausgebildete Luftleiteinrichtungen 8₁, 8₂, 8₃, 8₄ angeordnet, deren Anstellwinkel β₁, β₂, β₃, β₄ einstellbar sind, indem sie jeweils zwischen einem minimalen Anstellwinkel β₁,ₘᵢₙ, β₂,ₘᵢₙ, β₃,ₘᵢₙ, β₄,ₘᵢₙ und einem maximalen Anstellwinkel β₁,ₘₐₓ, β₂,ₘₐₓ, β_{3,max}, β_{4,max} variiert werden können. Die Anstellwinkel β₁, β₂, β₃, β₄ sind als der größere der beiden Winkel oder bei gleichgroßen Winkeln als einer der beiden gleichgroßen Winkel definiert, der ausgehend von einer jeweiligen Längsachse L₁, L₂, L₃, L₄ der Luftleiteinrichtung 8₁, 8₂, 8₃, 8₄ durch die mittlere Querschnittsebene Q₁, Q₂, Q₃, Q₄ desselben Flügelabschnitts der jeweiligen Luftleiteinrichtung 8₁, 8₂, 8₃, 8₄ und der Ebene E der Tragwerksstruktur 3 eingeschlossen wird. Zu Einstellung der Anstellwinkel β₁, β₂, β₃, β₄ können die Luftleiteinrichtungen 8₁, 8₂, 8₃, 8₄ jeweils um ihre Längsachse L₁, L₂, L₃, L₄, die drehbar in der Tragwerksstruktur 3 gelagert sind, gedreht werden. Insofern entsprechen die Längsachsen L₁, L₂, L₃, L₄ den Lagerachsen der Luftleiteinrichtungen 8₁, 8₂, 8₃, 8₄.

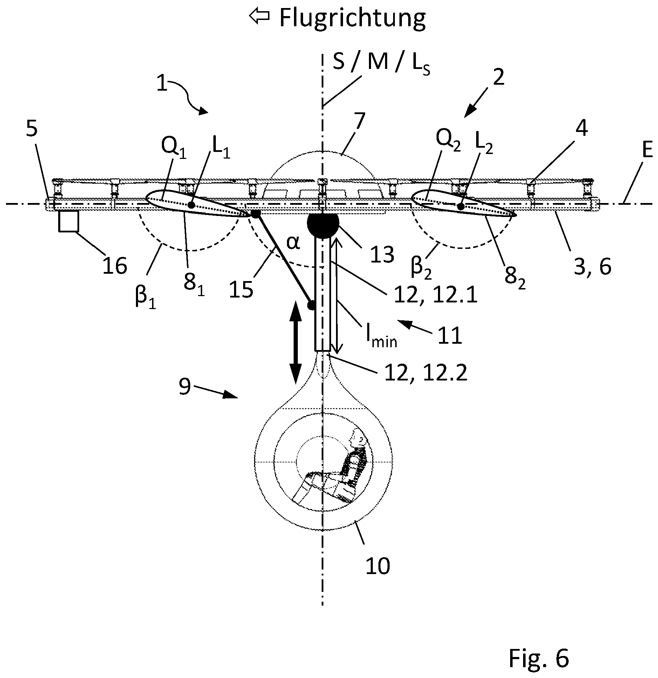

In der in Figur 1 dargestellten Startphase sind die Anstellwinkel β₁, β₂, β₃ β₄ jeweils 180° groß, d. h. die Luftleiteinrichtungen 8₁, 8₂, 8₃, 8₄ liegen mit der Tragwerksstruktur 3 in einer Ebene. Alternativ können in der Startphase einzelne oder alle Luftleiteinrichtungen 8₁, 8₂, 8₃, 8₄ auch bereits beim Starten mit einem kleineren Anstellwinkel β₁, β₂, β₃, β₄ kleiner 180° leicht gegenüber der Ebene E der Tragwerkstruktur 3 angestellt sein, wie z. B. in Fig. 6 dargestellt, oder mit einem minimalen Anstellwinkel β₁, β₂, β₃, β₄ bis 90° senkrecht gegenüber der Ebene E der Tragwerkstruktur 3 angestellt sein (nicht dargestellt).

Durch Änderung der Anstellwinkel β₁, β₂, β₃, β₄ können die Luftströmungsverhältnisse beeinflusst werden, so dass z. B. der Auftrieb des Fluggeräts 1 variiert werden kann.

Die Steuereinheit 7 weist ein halbkugelförmiges Gehäuse aus kohlefaserverstärktem oder glasfaserverstärktem Kunststoff auf. Neben der Steuereinheit 7 können in dem Gehäuse wiederaufladbare Akkumulatoren zur Energieversorgung der Antriebseinheiten 4 sowie weiterer elektrischer Energieverbraucher angeordnet sein. Die Steuereinheit 7 dient der Steuerung des Fluggeräts 1, indem sie dazu eingerichtet und ausgebildet ist, Steuersignale zu generieren und an die jeweiligen Aktoren auszugeben. Mittels der Steuersignale kann beispielsweise ein Einstellen der Anstellwinkel β₁, β₂, β₃, β₄ bewirkt werden.

Neben der Flugeinheit 2 weist das Fluggerät 1 die Transporteinheit 9 mit einer tropfenförmig ausgebildeten Beförderungskapsel 10 auf, wobei die Tropfenform im Flugzustand des Fluggeräts 1 im Wesentlichen vertikal zur Erdoberfläche erstreckt ist. Die Beförderungskapsel 10 ist vollständig geschlossen ausgebildet und verfügt über eine teilweise blickdurchlässige Hülle, so dass Personen aus der Beförderungskapsel 10 hinaus schauen können.

Im Inneren der Beförderungskapsel 10 sind mit Sicherheitsgurten und Airbags ausgestattete Sitze, eine Klimatisierungseinrichtung, Displays sowie eine Kommunikationseinrichtung zur Kommunikation mit der Steuereinheit 7, anderen Fluggeräten oder einer Bodenstation angeordnet (nicht dargestellt).

Die Beförderungskapsel 10 ist mittels der Verbindungseinrichtung 11 mit der Flugeinheit 2 verbunden, wobei die Transporteinheit 9 in der Startphase mittig unterhalb der Flugeinheit 2 angeordnet ist. Dazu weist die Verbindungseinrichtung 11 einen längserstreckten, rotationssymmetrisch ausgebildeten Schaft 12 auf, der einen Endes an die Beförderungskapsel 10 anschließt.

Der Schaft 12 sowie die Beförderungskapsel 10 weisen einen Faserverbundwerkstoff, z. B. einen kohlefaser- oder glasfaserverstärkten Kunststoff auf, wodurch sich die Transporteinheit 9 durch eine geringe Masse bei gleichzeitig sehr guten mechanischen Eigenschaften auszeichnet.

Zur Kupplung der Flugeinheit 2 und der Transporteinheit 9 dient die Gelenkkupplungseinrichtung 13. Die Ausbildung als Gelenkkupplung ermöglicht eine flexible Neigungsposition der Flugeinheit 2 bezüglich der Erdoberfläche. Da die Transporteinheit 9 stets vertikal bezüglich der Erdoberfläche ausgerichtet ist, d. h. die Längsachse L_{S} des Schafts 12 der Transporteinheit 9 folgt der Schwerkraftlinie S, kann eine vertikale Ausrichtung der Transporteinheit 9 auch bei einer abweichenden Ausrichtung der Flugeinheit 2 während des Flugbetriebes weitestgehend beibehalten werden und der Schwerpunkt des Fluggeräts 1 auf einen beschränkten zentralen Bereich konzentriert werden, was den Komfort und die Steuer- und Regelfähigkeit des Fluggerätes 1 verbessert.

Konkret kann der Neigungswinkel α, also der kleinere Winkel oder bei gleich großen Winkeln einer der beiden gleichgroßen Winkel, der von der Schwerkraftlinie S (überlagert mit der Längsachse L_{S} des Schafts 12 der Transporteinheit 9) und der Ebene E der Tragwerksstruktur 3 eingeschlossen wird, eingestellt werden, indem er zwischen einem minimalen Neigungswinkel αₘᵢₙ und einem maximalen Neigungswinkel αₘₐₓ variiert wird.

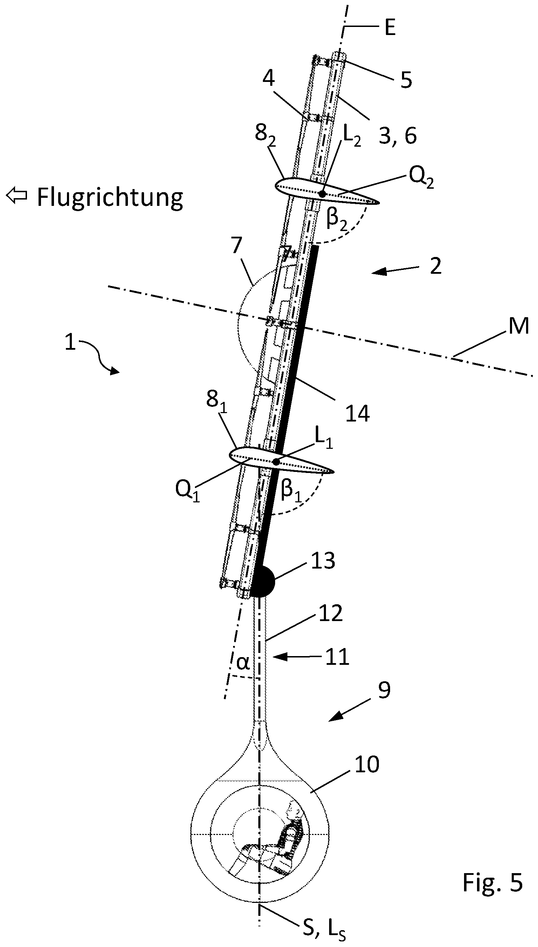

Der minimale Neigungswinkel αₘᵢₙ liegt in einem Bereich 0° ≤ αₘᵢₙ < 30°, nämlich bei ca. 15° (siehe Figur 5), so dass eine nahezu senkrechte Anordnung der Flugeinheit 2 bezüglich der Erdoberfläche ermöglicht wird. Der maximale Neigungswinkel αₘₐₓ beträgt 90°.

Die Gelenkkupplungseinrichtung 13 ist entlang der Tragwerksstruktur 3 parallel zur Ebene E verschiebbar, und zwar zwischen eine zentrischen Position (Figur 1) und einer äußeren Position (Figur 5). Die Verschiebbarkeit, in Figur 1 mittels Pfeilen angedeutet, wird mittels der linearen Schiebeeinrichtung 14 realisiert, die als Schienensystem ausgebildet ist. Die lineare Schiebeeinrichtung 14 erstreckt sich in Vorwärtsflugrichtung (in den Figuren jeweils nur als Flugrichtung bezeichnet) bis zur äußeren Begrenzung der Tragwerksstruktur 3, so dass die Gelenkkupplungseinrichtung 13 und die daran befestigte Transporteinheit 9 ebenfalls bis zur äußeren Begrenzung der Tragwerksstruktur 3 verschoben werden können.

Entgegen der Vorwärtsflugrichtung, also in Rückwärtsflugrichtung, erstreckt sich die lineare Schiebeeinrichtung 14 in diesem Ausführungsbeispiel bis zu ca. 1/3 des Radius der Tragwerksstruktur 3 über die Mittelachse M hinaus in Richtung der entgegengesetzten äußeren Begrenzung der Tragwerksstruktur 3. Dies ermöglicht eine ungehinderte Neigung der Flugeinheit 2 gegenüber der Schwerkraftlinie S auch bei einem Rückwärtsflug bzw. in einer Bremssituation oder bei notwendigen Schwerpunktverlagerungen zum Lageausgleich des Fluggeräts.

Alternativ, z. B. unter dem Gesichtspunkt von Masseneinsparungen, ist auch eine Erstreckung der linearen Schiebeeinrichtung 14 nur innerhalb eines Radius der Tragwerksstruktur 3 zwischen der Mittelachse M und der jeweiligen äußeren Begrenzung der Tragwerksstruktur 3 möglich.

Optional können Flugeinheit 2 und Transporteinheit 3 modular ausgebildet sein. In einer solchen Ausgestaltung ist die Gelenkkupplungseinrichtung 13 bevorzugt als selbsttätige Gelenckupplung ausgebildet ist, so dass ein automatisches An- und Abkuppeln verschiedener Transporteinheiten 3 bzw. Transportmodule an dieselbe Flugeinheit 2 bzw. dasselbe Flugmodul möglich ist, wobei die Transportmodule unterschiedlich ausgebildet sein können. Ebenso können unterschiedliche Flugmodule an dasselbe Transportmodul gekuppelt werden. Die Gelenkkupplungseinrichtung 13 kann zudem steuerbar ausgebildet sein, so dass eine Verbindung zwischen dem Transportmodul und dem Flugmodul gezielt hergestellt oder gelöst werden kann.

Figur 1 zeigt das vorstehend erläuterte Fluggerät 1 in der Startphase, d. h. in einer Flugphase, die durch einen im Wesentlichen senkrechten Flug von einem Startort zum Höhengewinn gekennzeichnet ist. Die Ausführungen bezüglich der Startphase gelten analog für die Landephase, die durch einen im Wesentlichen senkrechten Flug zu einem Zielort zum Höhenverlust gekennzeichnet ist.

In der dargestellten Startphase betragen die Anstellwinkel β₁, β₂, β₃, β₄ ca. maximal 180°, d. h. die mittleren Querschnittsebenen Q₁, Q₂, Q₃, Q₄ der Luftleiteinrichtungen 8₁, 8₂, 8₃, 8₄ sind im Wesentlichen parallel zur Ebene E ausgerichtet. Der Neigungswinkel α beträgt 90° und die Gelenkkupplungseinrichtung 13 befindet sich in einer zentrischen Position.

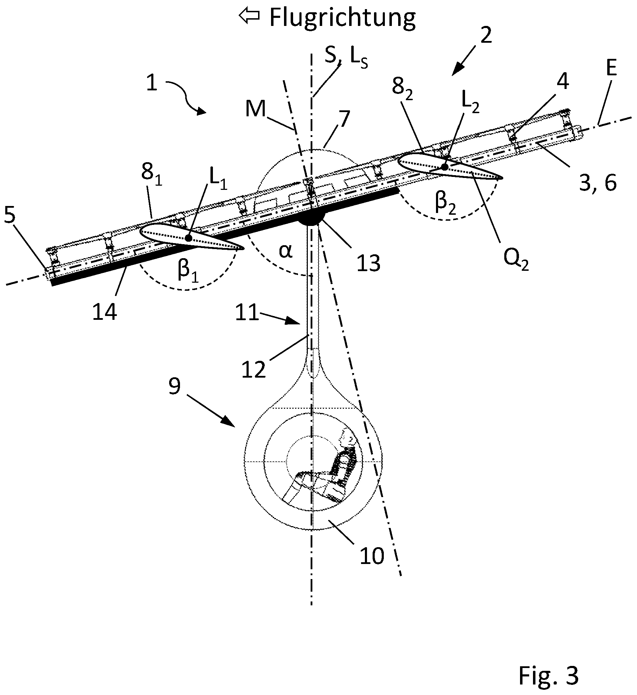

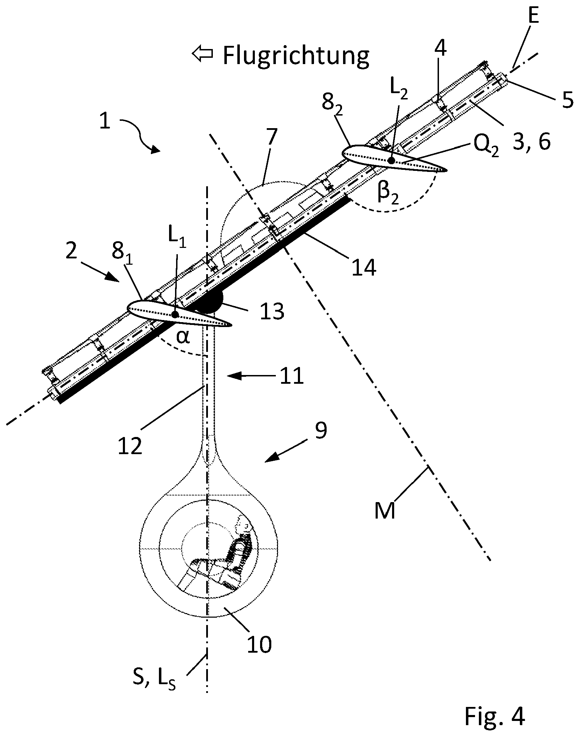

Beim in Figur 3 und 4 dargestellten Übergang von der Startphase (Figur 1) zur Streckenflugphase (Figur 5), wird die Flugeinheit 2 in Flugrichtung nach unten geneigt. Folglich verringert sich der Neigungswinkel α. Die Transporteinheit 3 ist unverändert im Wesentlichen senkrecht zur Erdoberfläche ausgerichtet. Gleichzeitig werden auch die Anstellwinkel β₁, β₂, β₃, β₄ verringert (leichtes bis mäßiges Aufstellen der Luftleiteinrichtungen 8₁, 8₂, 8₃, 8₄ aus der zur Ebene E parallelen Stellung, mit im Wesentlichen in Flugrichtung weisenden angeströmten Flügelabschnitten (Anströmflügel)), um eine verbesserte Auftriebswirkung des Fluggerätes 1 zu erhalten.

Mit zunehmender Verringerung des Neigungswinkels α wird auch die Position der Gelenkkupplungseinrichtung 13 von der zentrischen Position nach außen verschoben (Figur 4). Gleichzeitig werden auch die Anstellwinkel β₁, β₂, β₃, β₄ weiter verringert, so dass die Luftleiteinrichtungen 8₁, 8₂, 8₃, 8₄ bzw. die Anströmflügel weiterhin im Wesentlichen in Flugrichtung weisen, bis die Streckenflugphase nach Figur 5 erreicht wird.

Die in Figur 5 dargestellte Streckenflugphase dient dem Zurücklegen größerer Entfernungen und ist durch eine im Wesentlichen parallel zur Erdoberfläche verlaufende Flugbahn gekennzeichnet. Die Streckenflugphase wird mit minimalen Anstellwinkeln β₁,ₘᵢₙ, β₂,ₘᵢₙ, β₃,ₘᵢₙ, β₄,ₘᵢₙ und dem minimalen Neigungswinkel αₘᵢₙ absolviert. Die Gelenkkupplungseinrichtung 13 befindet sich in der äußeren Position, d. h. am äußeren Ende der linearen Schiebeeinrichtung 14.

Die äußere Position ist dabei derart weit von der Mittelachse M der Flugeinheit 2 entfernt, dass sich die Beförderungskapsel 10 außerhalb der äußeren Begrenzung der Tragwerksstruktur 3 befindet.

Die Figuren 6 bis 8 zeigen ein weiteres Ausführungsbeispiel eines Fluggeräts 1. Zum allgemeinen Aufbau und der Funktionsweise wird auf die Ausführungen zum ersten Ausführungsbeispiel verwiesen.

Im Unterschied zum Ausführungsbeispiel nach den Figuren 1 bis 5 ist die Gelenkkupplungseinrichtung 13 nicht verschiebbar, sondern verbleibt stets in der zentrischen Position.

Jedoch ist die Länge l des Schafts 12 zwischen einer minimalen Länge lₘᵢₙ und einer maximalen Länge lₘₐₓ variierbar. Dies ist in Figur 6 mittels Doppelpfeil angedeutet. Die Länge l des Schafts 12 entspricht dem Abstand zwischen Gelenkkupplungseinrichtung 13 und Beförderungskapsel 10.

Zudem sind optional eine Dämpfungseinrichtung 15 und eine Arretiereinrichtung 16 vorhanden.

Die separate Dämpfungseinrichtung 15 kann beispielsweise verwendet werden, falls die Gelenkkupplungseinrichtung 13 über kein Dämpfungsmittel verfügt oder die Dämpfungswirkung des Dämpfungsmittels der Gelenkkupplungseinrichtung 13 für bestimmte Einsatzfälle unterstützt werden soll.

In der Startphase bzw. Landephase (Figur 6) ist die Länge l des Schafts 12 minimal, so dass das Fluggerät 1 kompakt ausgebildet ist. Gleichwohl ist ein Sicherheitshöhenabstand zwischen Beförderungskapsel 10 und Gelenkkupplungseinrichtung 13 vorhanden, der durch die minimale Länge lₘᵢₙ vorgegeben wird.

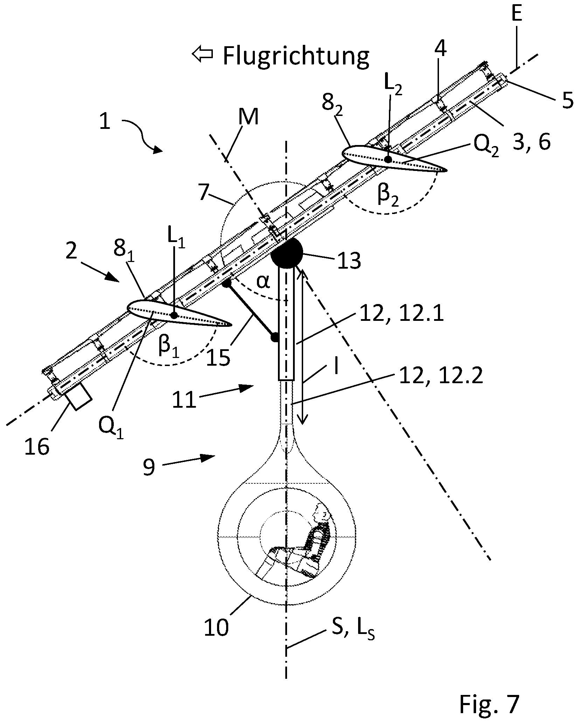

Beim Übergang von der Startphase zur Streckenflugphase bzw. beim Übergang von der Streckenflugphase in die Landephase (Figur 7) erfolgt die Änderung der Anstellwinkel β₁, β₂, β₃, β₄ und des Neigungswinkels α wie zum ersten Ausführungsbeispiel beschrieben.

Außerdem wird beim Übergang von der Startphase zur Streckenflugphase die Länge l des Schafts 12 verlängert bzw. beim Übergang von der Streckenflugphase in die Landephase die Länge l des Schafts 12 verkürzt. Dies wird z. B. realisiert, indem ein fest mit der Beförderungskapsel 10 verbundener unterer Schaftteil 12.2 teleskopartig aus dem fest mit der Gelenkkupplungseinrichtung 13 verbundenen oberen Schaftteil 12.1 ausgezogen bzw. in diesen eingezogen wird.

Der Neigungsvorgang der Flugeinheit 2 gegenüber der Beförderungskapsel 10 wird mittels der Dämpfungseinrichtung 15 abgefedert.

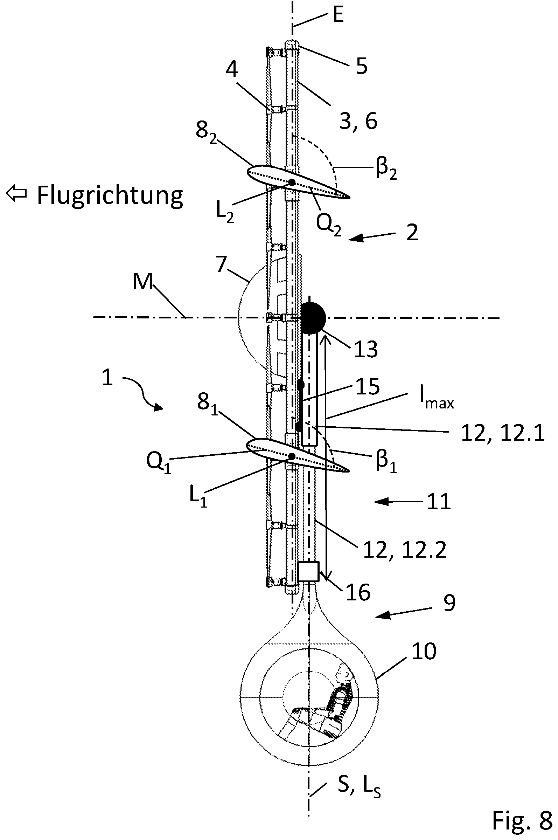

In der Streckenflugphase (Figur 8) ist die Länge l des Schafts 12 maximal. Der Schaft 12 kann im Wesentlichen parallel zur Ebene E der Tragwerksstruktur 3 ausgerichtet werden, so dass sich ein minimaler Neigungswinkel αₘᵢₙ von bis zu 0° ergibt.

Zur Verbesserung der Stabilität des Fluggeräts 1 kann der Schaft 12 an der Tragwerksstruktur 3 mittels der Arretiereinrichtung befestigt werden.

Die maximale Länge lₘₐₓ des Schafts 12 ist derart bemessen, dass sich die Beförderungskapsel 10 bei dem minimalen Neigungswinkel αₘᵢₙ außerhalb der äußeren Begrenzung der Tragwerksstruktur 3 befindet.

Beim Übergang von der Streckenflugphase zur Landephase werden die vorstehend beschriebenen Vorgänge in umgekehrter Reihenfolge ausgeführt.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Wird beispielsweise eine Beziehung beschrieben, die die Komponenten A, B und/oder C, enthält, kann die Beziehung die Komponenten A alleine; B alleine; C alleine; A und B in Kombination; A und C in Kombination; B und C in Kombination; oder A, B, und C in Kombination enthalten.

### Bezugszeichenliste

- 1: Fluggerät
- 2: Flugeinheit
- 3: Tragwerksstruktur
- 4: Antriebseinheit
- 5: Knotenpunkt
- 6: Tragwerksbalken
- 7: Steuereinheit
- 8, 8₁, 8₂ ... 8ₙ: Luftleiteinrichtung
- 9: Transporteinheit
- 10: Beförderungskapsel
- 11: Verbindungseinrichtung
- 12: Schaft
- 12.1: oberer Schaftteil
- 12.2: unterer Schaftteil
- 13: Gelenkkupplungseinrichtung
- 14: lineare Schiebeeinrichtung
- 15: Dämpfungseinrichtung
- 16: Arretiereinrichtung

- E: Ebene der Tragwerksstruktur
- L, L₁, L₂ ... Lₙ: Längsachse der Luftleiteinrichtung
- L_{S}: Längsachse des Schafts
- M: Mittelachse der Flugeinheit
- Q, Q₁, Q₂ ... Qₙ: mittlere Querschnittsebene der Luftleiteinrichtung
- S: Schwerkraftlinie

- l: Länge des Schafts
- lₘᵢₙ: minimale Länge des Schafts
- lₘₐₓ: maximale Länge des Schafts

- α: Neigungswinkel
- αₘᵢₙ: minimaler Neigungswinkel
- αₘₐₓ: maximaler Neigungswinkel

- β, β₁, β₂ ... βₙ: Anstellwinkel
- β₁₋ₙ,ₘᵢₙ: minimaler Anstellwinkel
- β_{1-n,max}: maximaler Anstellwinkel

## Patentansprüche

1. Senkrecht startendes und landendes Fluggerät (1) zum Transport von Personen und/oder Lasten, aufweisend:
- eine Flugeinheit (2), aufweisend eine in einer Ebene E erstreckt ausgebildete Tragwerksstruktur (3), die aus miteinander verbundenen Tragwerksbalken (6) in sich geschlossen ausgebildet ist, wobei die Ebene E der mittleren Querschnittsebene der Tragwerksstruktur entspricht, mit mehreren an der Tragwerksstruktur (3) angeordneten Antriebseinheiten (4), welche jeweils einen Elektromotor und wenigstens einen mit dem Elektromotor in Wirkverbindung stehenden Propeller aufweisen, und mehreren an der Tragwerksstruktur (3) angeordneten, beweglichen Luftleiteinrichtungen (8₁₋ₙ) mit jeweils einstellbarem Anstellwinkel β₁₋ₙ, wobei jeder Anstellwinkel β₁₋ₙ zwischen einem minimalen Anstellwinkel β₁₋ₙ,ₘᵢₙ und einem maximalen Anstellwinkel β₁₋ₙ,ₘₐₓ variierbar ist,
- eine Transporteinheit (9), aufweisend eine Beförderungskapsel (10) und eine Verbindungseinrichtung (11) zur Verbindung der Beförderungskapsel (10) mit der Flugeinheit (2), wobei die Verbindungseinrichtung (11) einen längserstreckten Schaft (12) aufweist, der einen Endes an die Beförderungskapsel (10) anschließt, und
- eine Gelenkkupplungseinrichtung (13) zur gelenkigen Verbindung der Flugeinheit (2) mit einem anderen Ende des längserstreckten Schafts (12) der Transporteinheit (9) und zur Winkel- bzw. Neigungseinstellung zwischen der Flugeinheit und der Transporteinheit (9) in verschiedenen Flugphasen,
- wobei ein einstellbarer Neigungswinkel α, der als der kleinere Winkel oder bei gleichgroßen Winkeln als einer der beiden gleichgroßen Winkel definiert ist und welcher von der Schwerkraftlinie S, die senkrecht zur Erdoberfläche verlaufend im Wesentlichen der Längsachse L_{S} des Schaftes (12) der bezüglich der Erdoberfläche in vertikaler Ausrichtung an der Flugeinheit(2) angeordneten Transporteinheit (9) entspricht, und der Ebene E der Tragwerksstruktur (3) der Flugeinheit (2) eingeschlossen ist, zwischen einem minimalen Neigungswinkel αmin und einem maximalen Neigungswinkel αmax variierbar ist, wobei der minimale Neigungswinkel αmin in einem Bereich 0° ≤ αmin < 30° liegt und der maximale Neigungswinkel αmax = 90° ist.

2. Fluggerät (1) nach Anspruch 1, wobei der minimale Neigungswinkel αₘᵢₙ in einem Bereich 0° ≤ αₘᵢₙ ≤ 10° liegt.

3. Fluggerät (1) nach einem der vorstehenden Ansprüche, wobei die Flugeinheit (2) eine mittig zur vertikalen Mittelachse M der Flugeinheit (2) angeordneten Steuereinheit (7) zur Steuerung des Fluggeräts (1) aufweist.

4. Fluggerät (1) nach Anspruch 3, wobei die Steuereinheit (7) ein halbkugelförmiges Gehäuse aus kohlefaserverstärktem oder glasfaserverstärktem Kunststoff aufweist.

5. Fluggerät (1) nach Anspruch 4, wobei in dem Gehäuse der Steuereinheit (7) wiederaufladbare Akkumulatoren zur Energieversorgung der Antriebseinheiten (4) angeordnet sind.

6. Fluggerät (1) nach einem der vorstehenden Ansprüche, wobei die Gelenkkupplungseinrichtung (13) entlang der Tragwerksstruktur (3) parallel zur Ebene E zwischen einer zentrischen Position und einer äußeren Position verschiebbar ist.

7. Fluggerät (1) nach einem der vorstehenden Ansprüche, wobei eine Länge l des Schafts (12) zwischen einer minimalen Länge lₘᵢₙ und einer maximalen Länge lₘₐₓ variierbar ausgebildet ist.

8. Fluggerät (1) nach Anspruch 7, wobei sich die äußere Position derart entfernt von einer Mittelachse M der Flugeinheit (2) befindet und/oder wobei die maximale Länge lₘₐₓ des Schafts (12) derart lang ist, dass sich die Beförderungskapsel (10) bei dem minimalen Neigungswinkel αₘᵢₙ außerhalb einer äußeren Begrenzung der Tragwerksstruktur (3) befindet.

9. Fluggerät (1) nach einem der Ansprüche 6 bis 8, wobei die Gelenkkupplungseinrichtung (13) in Abhängigkeit des Neigungswinkels α entlang der Tragwerksstruktur (3) parallel zur Ebene E verschiebbar ist und/oder wobei eine Länge l des Schafts (12) in Abhängigkeit des Neigungswinkels α variierbar ausgebildet ist.

10. Fluggerät (1) nach einem der vorstehenden Ansprüche, wobei die Tragwerksstruktur (3) und die Verbindungseinrichtung (11) über eine Dämpfungseinrichtung (15) miteinander verbunden sind.

11. Fluggerät (1) nach einem der vorstehenden Ansprüche, wobei an der Tragwerksstruktur (3) eine Arretiereinrichtung (16), ausgebildet zum Arretieren des Schafts (12), angeordnet ist.

12. Fluggerät (1) nach einem der vorstehenden Ansprüche, wobei die Flugeinheit (2) und die Transporteinheit (9) modular ausgebildet sind, so dass die Flugeinheit (2) und eine beliebige Transporteinheit (9) mittels der Gelenkkupplungseinrichtung (13) beliebig miteinander verbindbar und trennbar sind.

13. Fluggerät (1) nach einem der vorstehenden Ansprüche, wobei die Luftleiteinrichtungen (8₁₋ₙ) tragflächenartig ausgebildet sind.

14. Fluggerät (1) nach Anspruch 3 oder nach einem der Ansprüche 4 bis 13 sofern von Anspruch 3 direkt oder indirekt abhängig, wobei die Steuereinheit (7) eingerichtet und ausgebildet ist zum Generieren und Ausgeben von Steuersignalen, die ein Einstellen des Neigungswinkels α und/oder ein Einstellen der Anstellwinkel β₁₋ₙ bewirken.

15. Fluggerät (1) nach Anspruch 3 oder nach einem der Ansprüche 4 bis 14 sofern von Anspruch 3 direkt oder indirekt abhängig, wobei die Steuereinheit (7) eingerichtet und ausgebildet ist zum Generieren und Ausgeben von Steuersignalen, die eine Längenänderung des Schafts (12) und/oder ein Ändern einer Verschiebeposition der Gelenkkupplungseinrichtung (13) entlang der Tragwerksstruktur (3) parallel zur Ebene E bewirken.

16. Verfahren zum Betreiben eines Fluggeräts (1) nach einem der vorstehenden Ansprüche, bei dem das Fluggerät (1) in zumindest einer Startphase, einer Streckenflugphase und einer Landephase betreibbar ist, wobei
- während des Übergangs von der Startphase zur Streckenflugphase der Neigungswinkels α der Flugeinheit (2) verringert wird, und
- während des Übergangs von der Streckenflugphase zur Landephase der Neigungswinkels α der Flugeinheit (2) vergrößert wird.

17. Verfahren nach Anspruch 16, wobei
- während der Startphase die Anstellwinkel β₁₋ₙ einer bestimmten Anzahl der Luftleiteinrichtungen (8₁₋ₙ) verringert werden, vorzugsweise in einen Bereich eines minimalen Anstellwinkels β_{1-n,min} von 90° ≤ β_{1-n,min} ≤ 120° und /oder
- während der Landephase die Anstellwinkel β₁₋ₙ einer bestimmten Anzahl der Luftleiteinrichtungen (8₁₋ₙ) vergrößert werden, vorzugsweise in einen Bereich eines maximalen Anstellwinkels β_{1-n,max} von 150° ≤ β_{1-n,max} ≤ 180°.

18. Verfahren nach Anspruch 16 oder 17, wobei
- während des Übergangs von der Startphase zur Streckenflugphase der Schaft (12) der Transporteinheit (9) verlängert wird und/oder die Gelenkkupplungseinrichtung (13) entlang der Tragwerksstruktur (3) parallel zur Ebene E in eine äußere Position verschoben wird, und
- während des Übergangs von der Streckenflugphase zur Landephase der Schaft (12) der Transporteinheit (9) verkürzt wird und/oder die Gelenkkupplungseinrichtung (13) entlang der Tragwerksstruktur (3) parallel zur ebene E in eine zentrische Position verschoben wird.

## Claims

1. A vertical take-off and landing aircraft (1) for transporting people and/or loads, having:
- a flight unit (2), having a wing assembly (3) extending in a plane E, which is formed as a closed framework from interconnected wing assembly struts (6), where the plane E corresponds to the central cross-sectional plane of the wing assembly, with several drive units (4) arranged on the wing assembly (3), each of which drive units has an electric motor and at least one propeller operatively connected to the electric motor, and several movable air guiding devices (8₁₋ₙ) arranged on the wing assembly (3), each of which air guiding devices has an adjustable angle of incidence β₁₋ₙ, where each angle of incidence β₁₋ₙ is variable between a minimum angle of incidence β_{1-n,min} and a maximum angle of incidence β_{1-n,max},
- a transport unit (9), having a conveying pod (10) and a connecting device (11) for connecting the conveying pod (10) to the flight unit (2), where the connecting device (11) has a longitudinally extended shaft (12) connected to one end of the conveying pod (10), and
- an articulated coupling device (13) for articulated connection of the flight unit (2) to another end of the longitudinally extended shaft (12) of the transport unit (9) and for angle or tilt adjustment between the flight unit and the transport unit (9) in different flight phases,
- where an adjustable tilt angle α, which is defined as the smaller angle or, in the case of angles of the same size, as one of the two angles of the same size and which is enclosed by the line of gravity S, which running perpendicular to the earth's surface essentially corresponds to the longitudinal axis Ls of the shaft (12) of the transport unit (9) arranged on the flight unit (2) in vertical orientation with respect to the earth's surface, and the plane E of the wing assembly (3) of the flight unit (2), is variable between a minimum tilt angle αmin and a maximum tilt angle αmax, where the minimum tilt angle αmin is in a range 0° ≤ αmin < 30° and the maximum tilt angle αmax = 90°.

2. Aircraft (1) according to claim 1, where the minimum tilt angle αₘᵢₙ is in a range 0° ≤ αₘᵢₙ ≤ 10°.

3. Aircraft (1) according to one of the preceding claims, where the flight unit (2) has a control unit (7) arranged centrally to the vertical centre axis M of the flight unit (2) for controlling the aircraft (1).

4. Aircraft (1) according to claim 3, where the control unit (7) has a hemispherical housing made of carbon-fibre-reinforced or glass-fibre-reinforced plastic.

5. Aircraft (1) according to claim 4, where rechargeable batteries for supplying power to the drive units (4) are arranged in the housing of the control unit (7).

6. Aircraft (1) according to one of the preceding claims, where the articulated coupling device (13) is movable along the wing assembly (3) parallel to the plane E between a centric position and an outer position.

7. Aircraft (1) according to one of the preceding claims, where a length 1 of the shaft (12) is designed to be variable between a minimum length lₘᵢₙ and a maximum length lₘₐₓ.

8. Aircraft (1) according to claim 7, where the outer position is located at such a distance from a centre axis M of the flight unit (2) and/or where the maximum length lₘₐₓ of the shaft (12) is so long that the conveying pod (10) at the minimum tilt angle αₘᵢₙ is located outside an outer boundary of the wing assembly (3).

9. Aircraft (1) according to one of claims 6 to 8, where the articulated coupling device (13) is movable along the wing assembly (3) parallel to the plane E depending on the tilt angle α and/or where a length 1 of the shaft (12) is designed to be variable depending on the tilt angle α.

10. Aircraft (1) according to one of the preceding claims, where the wing assembly (3) and the connecting device (11) are connected to each other via a damping device (15).

11. Aircraft (1) according to one of the preceding claims, where a locking device (16), designed for locking the shaft (12), is arranged on the wing assembly (3).

12. Aircraft (1) according to one of the preceding claims, where the flight unit (2) and the transport unit (9) are of modular design, so that the flight unit (2) and any desired transport unit (9) can be selectively connected to and separated from one another by means of the articulated coupling device (13).

13. Aircraft (1) according to one of the preceding claims, where the air guiding devices (8₁₋ₙ) have a wing-shaped design.

14. Aircraft (1) according to claim 3 or according to one of claims 4 to 13 insofar as they depend directly or indirectly on claim 3, where the control unit (7) is set up and designed to generate and issue control signals which cause an adjustment of the tilt angle α and/or an adjustment of the angle of incidence β₁₋ₙ.

15. Aircraft (1) according to claim 3 or according to one of claims 4 to 14 insofar as they depend directly or indirectly on claim 3, where the control unit (7) is set up and designed to generate and issue control signals which cause a change in length of the shaft (12) and/or a change in a movable position of the articulated coupling device (13) along the wing assembly (3) parallel to the plane E.

16. Method for operating an aircraft (1) according to one of the preceding claims, in which the aircraft (1) can be operated in at least a take-off phase, an en-route flight phase and a landing phase, where
- the tilt angle α of the flight unit (2) is reduced during the transition from the take-off phase to the en-route flight phase, and
- the tilt angle α of the flight unit (2) is increased during the transition from the en-route flight phase to the landing phase.

17. Method according to claim 16, where
- during the start phase, the angles of incidence β₁₋ₙ of a certain number of the air guiding devices (8₁₋ₙ) are reduced, preferably into a range of a minimum angle of incidence β_{l-n,min} of 90° ≤ β_{l-n,min} ≤ 120° and/or
- during the landing phase, the angles of incidence β₁₋ₙ of a certain number of the air guiding devices (8₁₋ₙ) are increased, preferably into a range of a maximum angle of incidence β_{l-n,max} of 150° ≤ β_{l-n,max} ≤ 180°.

18. Method according to claim 16 or 17, where
- during the transition from the take-off phase to the en-route flight phase, the shaft (12) of the transport unit (9) is extended and/or the articulated coupling device (13) is moved along the wing assembly (3) parallel to the plane E into an outer position, and
- during the transition from the en-route flight phase to the landing phase, the shaft (12) of the transport unit (9) is shortened and/or the articulated coupling device (13) is moved along the wing assembly (3) parallel to the plane E into a centric position.

## Revendications

1. Aéronef (1) à décollage et atterrissage verticaux pour le transport de personnes et/ou de charges, comprenant :
- une unité de vol (2) présentant une structure porteuse (3) configurée de manière à s'étendre sur un plan E, structure qui est réalisée fermée sur elle-même au moyen de poutrelles porteuses (6) reliées entre elles, sachant que le plan E correspond au plan transversal moyen de la structure porteuse, avec plusieurs unités de propulsion (4) disposées sur la structure porteuse (3) et qui présentent chacune un moteur électrique et au moins une hélice en liaison active avec le moteur électrique, et plusieurs dispositifs mobiles de guidage d'air (8₁₋ₙ) disposés sur la structure porteuse (3) et présentant chacun un angle d'attaque β₁₋ₙ réglable, chaque angle d'attaque β₁₋ₙ pouvant être varié entre un angle d'attaque minimal β_{1-n,min} et un angle d'attaque maximal β_{1-n,max},
- une unité de transport (9) présentant une capsule de transport (10) et un dispositif de connexion (11) pour raccorder la capsule de transport (10) à l'unité de vol (2), sachant que le dispositif de raccordement (11) comprend une tige s'étendant en longueur (12) dont une extrémité est raccordée à la capsule de transport (10), et
- un dispositif d'accouplement articulé (13) pour relier de manière articulée l'unité de vol (2) à une autre extrémité de la tige s'étendant en longueur (12) de l'unité de transport (9) et pour régler l'angle ou l'inclinaison entre l'unité de vol et l'unité de transport (9) dans différentes phases de vol,
- sachant qu'un angle d'inclinaison réglable α qui est défini comme l'angle plus petit ou, dans le cas d'angles de même grandeur, comme l'un des deux angles de même grandeur, et qui correspond à la ligne de gravité S qui, s'étendant perpendiculairement à la surface de la terre, correspond essentiellement à l'axe longitudinal Ls de la tige (12) de l'unité de transport (9) disposée en alignement vertical sur l'unité de vol (2) par rapport à la surface de la terre, et est inclus dans le plan E de la structure porteuse (3) de l'unité de vol (2), peut varier entre un angle d'inclinaison minimal αmin et un angle d'inclinaison maximal αmax, l'angle d'inclinaison minimal αmin étant situé dans une plage de 0° ≤ αmin < 30° et l'angle d'inclinaison maximal αmax = 90°.

2. Aéronef (1) selon la revendication 1, dans lequel l'angle d'inclinaison minimal αₘᵢₙ est compris dans une plage de 0° ≤ αₘᵢₙ ≤ 10°.

3. Aéronef (1) selon l'une des revendications précédentes, sachant que l'unité de vol (2) présente une unité de commande (7) disposée au centre par rapport à l'axe central vertical M de l'unité de vol (2) et destinée à commander l'aéronef (1).

4. Aéronef (1) selon la revendication 3, sachant que l'unité de commande (7) présente un boîtier hémisphérique en matière plastique renforcée de fibres de carbone ou en matière plastique renforcée de fibres de verre.

5. Aéronef (1) selon la revendication 4, sachant que sont disposés, dans le boîtier de l'unité de commande (7), des accumulateurs rechargeables destinés à l'alimentation en énergie des unités de propulsion (4).

6. Aéronef (1) selon l'une des revendications précédentes, dans lequel le dispositif d'accouplement articulé (13) est déplaçable le long de la structure porteuse (3) parallèlement au plan E, entre une position centrée et une position extérieure.

7. Aéronef (1) selon l'une des revendications précédentes, dans lequel une longueur 1 de la tige (12) est configurée pour varier entre une longueur minimale lₘᵢₙ et une longueur maximale lₘₐₓ.

8. Aéronef (1) selon la revendication 7, dans lequel la position extérieure est éloignée d'un axe central M de l'unité de vol (2) et/ou dans lequel la longueur maximale lₘₐₓ de la tige (12) est telle que la capsule de transport (10) se trouve, avec l'angle d'inclinaison minimal αₘᵢₙ, à l'extérieur d'une délimitation extérieure de la structure porteuse (3).

9. Aéronef (1) selon l'une des revendications 6 à 8, dans lequel le dispositif d'accouplement articulé (13) peut être déplacé le long de la structure porteuse (3) parallèlement au plan E en fonction de l'angle d'inclinaison α et/ou dans lequel une longueur 1 de la tige (12) est configurée de manière variable en fonction de l'angle d'inclinaison α.

10. Aéronef (1) selon l'une des revendications précédentes, dans lequel la structure porteuse (3) et le dispositif de liaison (11) sont reliés entre eux par un dispositif d'amortissement (15).

11. Aéronef (1) selon l'une des revendications précédentes, dans lequel un dispositif de blocage (16) conçu pour bloquer la tige (12) est disposé sur la structure porteuse (3).

12. Aéronef (1) selon l'une des revendications précédentes, dans lequel l'unité de vol (2) et l'unité de transport (9) sont configurées modulaires, de sorte que l'unité de vol (2) et une unité de transport (9) quelconque peuvent être reliées et séparées entre elles à volonté au moyen du dispositif d'accouplement articulé (13).

13. Aéronef (1) selon l'une des revendications précédentes, dans lequel les dispositifs de guidage d'air (8₁₋ₙ) sont réalisés en forme de surfaces portantes.

14. Aéronef (1) selon la revendication 3 ou selon l'une quelconque des revendications 4 à 13 dans la mesure où elle dépend directement ou indirectement de la revendication 3, l'unité de commande (7) étant agencée et configurée pour générer et émettre des signaux de commande qui provoquent un réglage de l'angle d'inclinaison α et/ou un réglage des angles d'attaque β₁₋ₙ.

15. Aéronef (1) selon la revendication 3 ou selon l'une des revendications 4 à 14 dans la mesure où elle dépend directement ou indirectement de la revendication 3, l'unité de commande (7) étant agencée et configurée pour générer et émettre des signaux de commande qui provoquent une modification de la longueur de la tige (12) et/ou une modification d'une position de déplacement du dispositif d'accouplement articulé (13) le long de la structure porteuse (3) parallèlement au plan E.

16. Procédé d'exploitation d'un aéronef (1) selon l'une des revendications précédentes, dans lequel l'aéronef (1) peut être exploité dans au moins une phase de décollage, une phase de vol de croisière et une phase d'atterrissage, sachant que
- pendant la transition de la phase de décollage vers la phase de vol de croisière, l'angle d'inclinaison α de l'unité de vol (2) diminue, et que
- pendant la transition de la phase de vol de croisière vers la phase d'atterrissage, l'angle d'inclinaison α de l'unité de vol (2) augmente.

17. Procédé selon la revendication 16, dans lequel
- pendant la phase de décollage, les angles d'attaque β₁₋ₙ d'un certain nombre des dispositifs de guidage d'air (8₁₋ₙ) diminuent, de préférence dans une plage d'un angle d'attaque minimal β_{l-n,min} de 90° ≤ β_{l-n,min} ≤ 120° et/ou
- pendant la phase d'atterrissage, les angles d'attaque β₁₋ₙ d'un certain nombre des dispositifs de guidage d'air (8₁₋ₙ) augmentent, de préférence dans une plage d'un angle d'attaque maximal β_{l-n,max} von 150° ≤ β_{l-n,max} ≤ 180°.

18. Procédé selon la revendication 16 ou 17, dans lequel
- pendant le passage de la phase de décollage à la phase de vol de croisière, la tige (12) de l'unité de transport (9) s'allonge et/ou le dispositif d'accouplement articulé (13) se déplace, le long de la structure porteuse (3) parallèlement au plan E, vers une position extérieure, et dans lequel
- pendant le passage de la phase de vol de croisière à la phase d'atterrissage, la tige (12) de l'unité de transport (9) se raccourcit et/ou le dispositif d'accouplement articulé (13) se déplace le long de la structure porteuse (3) parallèlement au plan E dans une position centrée.
